# EUROPEAN PATENT APPLICATION

(11) **EP 4 848 827 A1**
(43) Date of publication of application: **02.12.2026**
(21) Application number: 24919207.1
(22) Date of filing: 22.01.2024
(51) Int. Cl.: H04W 52/02

(54) **COMMUNICATION METHOD, APPARATUS AND DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: CUI, Shengjiang, Dongguan, Guangdong 523860 (CN); ZHANG, Zhi, Dongguan, Guangdong 523860 (CN); XU, Weijie, Dongguan, Guangdong 523860 (CN)
(74) Representative: RGTH
(86) International application number: PCT/CN2024/073495
(87) International publication number: WO 2025/156088

(57) **Abstract**

The present application belongs to the field of communications. Disclosed are a communication method, apparatus and device, and a storage medium. The method is executed by a first device. The method comprises: using a first transmitter to send a first signal, and/or using a second transmitter to send a second signal in a backscatter manner, wherein the first signal is used for carrying first information, and the second signal is used for carrying the first information and/or used for positioning.

## Description

### TECHNICAL FIELD

The present application relates to the field of communications, and more particularly, to a communication method, an apparatus, a device, and a storage medium.

### BACKGROUND

Conventional transmitters in common terminal devices impose high requirements on the built-in power supply and power supply systems of the terminal devices, and their transmission power consumption is relatively high. However, in some communication scenarios, there is an urgent demand for low-power communication, and it is difficult to achieve low-power communication using the conventional transmitters.

Therefore, from the perspective of transmission manners, it is possible to reduce the power consumption required for the terminal devices to transmit signals to achieve low-power communication. At present, there is no specific feasible solution for how to design transmission manners for low-power communication.

### SUMMARY

The present application provides a communication method, an apparatus, a device, and a storage medium. The technical solutions at least include the following content.

According to one aspect of embodiments of the present application, a communication method is provided, which is performed by a first device having a first transmitter and a second transmitter, and the method includes:
transmitting a first signal using the first transmitter, and/or transmitting a second signal in a backscatter manner using the second transmitter; where the first signal is used to carry first information, and the second signal is used to carry the first information and/or used for positioning.

According to another aspect of the embodiments of the present application, a communication method is provided, where the method is performed by a second device and includes:
receiving a first signal and/or a second signal; where the first signal is used to carry first information, the first signal is transmitted using a first transmitter, the second signal is used to carry the first information and/or used for positioning, and the second signal is transmitted in a backscatter manner using a second transmitter.

According to another aspect of the embodiments of the present application, a communication method is provided, where the method is performed by a third device and includes:
transmitting control information; where the control information is used to control a first device to transmit a first signal using a first transmitter, and/or control a first device to transmit a second signal in a backscatter manner using a second transmitter;
where the first signal is used to carry first information, and the second signal is used to carry the first information and/or used for positioning.

According to one aspect of the embodiments of the present application, a communication apparatus is provided, which includes: a first transmitting module and/or a second transmitting module;
the first transmitting module is configured to transmit a first signal in an active transmission manner; and the second transmitting module is configured to transmit a second signal in a backscatter manner; where the first signal is used to carry first information, and the second signal is used to carry the first information and/or used for positioning.

According to another aspect of the embodiments of the present application, a communication apparatus is provided, which includes:
a receiving module, configured to receive a first signal and/or a second signal; where the first signal is used to carry first information, the first information is transmitted using a first transmitter, the second signal is used to carry the first information and/or used for positioning, and the second signal is transmitted in a backscatter manner using a second transmitter.

According to another aspect of the embodiments of the present application, a communication apparatus is provided, which includes:
a transmitting module, configured to transmit control information; where the control information is used to control a first device to transmit a first signal using a first transmitter, and/or control a first device to transmit a second signal in a backscatter manner using a second transmitter;
where the first signal is used to carry first information, and the second signal is used to carry the first information and/or used for positioning.

According to one aspect of the embodiments of the present application, a communication device is provided, which includes a first transmitter and/or a second transmitter. The communication device is configured to implement the above communication method.

According to another aspect of the embodiments of the present application, a communication device is provided, which includes: a processor, a receiver and/or a transmitter connected to the processor, and a memory configured to store executable instructions for the processor. The communication device is configured to implement the above communication methods.

According to one aspect of the present application, a computer-readable storage medium is provided, which stores executable instructions, and the executable instructions are loaded and executed by a processor to implement the communication methods as described in the above aspects.

According to one aspect of the present application, a computer program product is provided, which includes computer instructions stored in a computer-readable storage medium. A processor of a computer device reads the computer instructions from the computer-readable storage medium, and the processor executes the computer instructions to enable the computer device to perform the communication methods as described in the above aspects.

According to one aspect of the present application, a chip is provided, which includes a programmable logic circuit and/or program instructions. When the chip is running, the chip is configured to implement the communication methods as described in the above aspects.

According to one aspect of the present application, a computer program is provided, which includes computer instructions. A processor of a computer device executes the computer instructions to enable the computer device to perform the communication methods as described in the above aspects.

The technical solutions provided by the embodiments of the present application can include the following beneficial effects:
A first device, equipped with a first transmitter and a second transmitter, supports both an active transmission communication manner and a backscatter communication manner. Since the backscatter communication manner does not require the first device to generate a carrier on its own, the power consumption at the first device side can be effectively saved, which helps to achieve low-power communication. Moreover, the first device supports the second transmitter for positioning and using the backscatter communication manner to improve positioning accuracy.

### BRIEF DESCRIPTION OF THE DRAWINGS

To more clearly illustrate the technical solutions in the embodiments of the present application, the drawings required for the description of the embodiments will be briefly introduced below. Obviously, the drawings described below are only some embodiments of the present application. For those ordinary skilled in the art, other drawings may be obtained based on these drawings without creative efforts.
FIG. 1 illustrates a schematic diagram of a wireless communication system provided by an exemplary embodiment of the present application.
FIG. 2 illustrates a schematic diagram of a zero-power communication system provided by an exemplary embodiment of the present application.
FIG. 3 illustrates a schematic diagram of radio frequency power harvesting provided by an exemplary embodiment of the present application.
FIG. 4 illustrates a schematic diagram of backscatter communication provided by an exemplary embodiment of the present application.
FIG. 5 illustrates a schematic diagram of resistive load modulation provided by an exemplary embodiment of the present application.
FIG. 6 illustrates a schematic diagram of backscatter communication provided by an exemplary embodiment of the present application.
FIG. 7 illustrates a schematic diagram of a positioning method provided by an exemplary embodiment of the present application.
FIG. 8 illustrates a schematic diagram of a positioning method provided by an exemplary embodiment of the present application.
FIG. 9 illustrates a scenario schematic diagram of a communication method provided by an exemplary embodiment of the present application.
FIG. 10 illustrates a scenario schematic diagram of a communication method provided by an exemplary embodiment of the present application.
FIG. 11 illustrates a scenario schematic diagram of a communication method provided by an exemplary embodiment of the present application.
FIG. 12 illustrates a schematic flowchart of a communication method provided by an exemplary embodiment of the present application.
FIG. 13 illustrates a schematic flowchart of a communication method provided by an exemplary embodiment of the present application.
FIG. 14 illustrates a schematic flowchart of a communication method provided by an exemplary embodiment of the present application.
FIG. 15 illustrates a scenario schematic diagram of a communication method provided by an exemplary embodiment of the present application.
FIG. 16 illustrates a scenario schematic diagram of a communication method provided by an exemplary embodiment of the present application.
FIG. 17 illustrates a scenario schematic diagram of a communication method provided by an exemplary embodiment of the present application.
FIG. 18 illustrates a schematic flowchart of a communication method provided by an exemplary embodiment of the present application.
FIG. 19 illustrates a schematic flowchart of a communication method provided by an exemplary embodiment of the present application.
FIG. 20 illustrates a schematic flowchart of a communication method provided by an exemplary embodiment of the present application;
FIG. 21 illustrates a scenario schematic diagram of a communication method provided by an exemplary embodiment of the present application.
FIG. 22 illustrates a scenario schematic diagram of a communication method provided by an exemplary embodiment of the present application.
FIG. 23 illustrates a scenario schematic diagram of a communication method provided by an exemplary embodiment of the present application.
FIG. 24 illustrates a schematic flowchart of a communication method provided by an exemplary embodiment of the present application.
FIG. 25 illustrates a schematic flowchart of a communication method provided by an exemplary embodiment of the present application.
FIG. 26 illustrates a schematic flowchart of a communication method provided by an exemplary embodiment of the present application.
FIG. 27 illustrates a scenario schematic diagram of a communication method provided by an exemplary embodiment of the present application.
FIG. 28 illustrates a scenario schematic diagram of a communication method provided by an exemplary embodiment of the present application.
FIG. 29 illustrates a scenario schematic diagram of a communication method provided by an exemplary embodiment of the present application.
FIG. 30 illustrates a schematic flowchart of a communication method provided by an exemplary embodiment of the present application.
FIG. 31 illustrates a schematic flowchart of a communication method provided by an exemplary embodiment of the present application.
FIG. 32 illustrates a schematic flowchart of a communication method provided by an exemplary embodiment of the present application.
FIG. 33 illustrates a block diagram of a transmitting system provided by an exemplary embodiment of the present application.
FIG. 34 illustrates a block diagram of a communication apparatus provided by an exemplary embodiment of the present application.
FIG. 35 illustrates a block diagram of a communication apparatus provided by an exemplary embodiment of the present application.
FIG. 36 illustrates a block diagram of a communication apparatus provided by an exemplary embodiment of the present application.
FIG. 37 illustrates a schematic block diagram of a communication device provided by an exemplary embodiment of the present application.
FIG. 38 illustrates a schematic block diagram of a communication device provided by an exemplary embodiment of the present application.

### DETAILED DESCRIPTION

To make the purposes, technical solutions, and advantages of the present application clearer, the implementations of the present application will be further described in detail below with reference to the drawings. Exemplary embodiments will be described in detail here, with examples thereof illustrated in the drawings. In a case where the following description refers to the drawings, unless otherwise indicated, the same numbers in different drawings represent the same or similar elements. The implementations described in the following exemplary embodiments do not represent all implementations consistent with the present application. Instead, they are merely examples of apparatuses and methods consistent with some aspects of the present application as detailed in the appended claims.

The terms used in the present application are for the purpose of describing particular embodiments only and not intended to limit the present application. Singular forms such as "a", "the", and "this/that" used in the present application and the appended claims are intended to include the plural forms as well, unless the context clearly indicates otherwise. It should also be understood that the term "and/or" as used herein refers to and includes any and all possible combinations of one or more of associated listed items.

It should be understood that although the terms such as first, second, third, etc., may be used in the present application to describe various information, such information should not be limited to these terms. These terms are only used to distinguish with the same type from another. For example, without departing from the scope of the present application, first information may also be referred to as second information, and similarly, the second information may also be referred to as the first information. Depending on the context, the word "if" as used here may be interpreted as "when", or "while", or "in response to determining".

In the embodiments of the present application, "specified" may be implemented by pre-storing corresponding codes, tables, or other manners that can be used to indicate relevant information in communication devices (e.g., a terminal device, a network device), and its specific implementation is not limited in the present application. That something is specified by a communication protocol may also be understood as being predefined by the communication protocol.

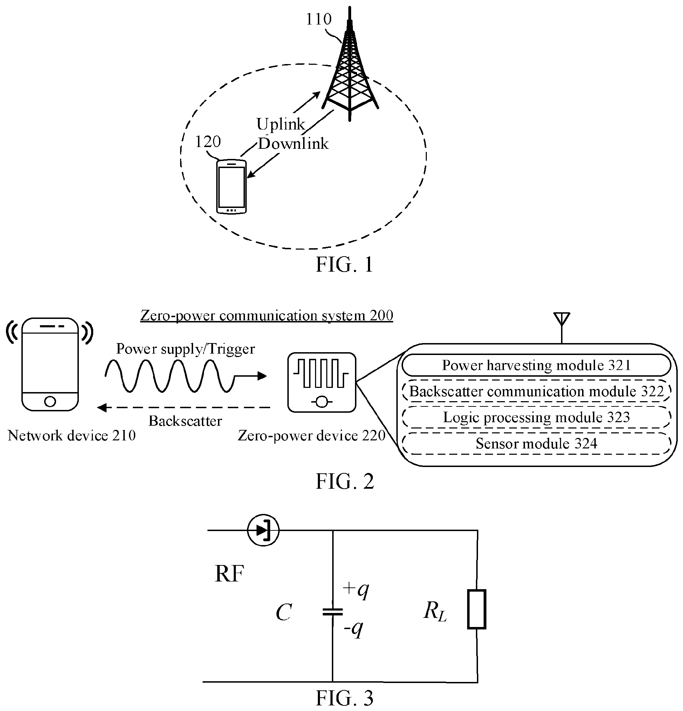

FIG. 1 illustrates a schematic diagram of a wireless communication system provided by an exemplary embodiment of the present application. The wireless communication system includes a network device 110 and a terminal device 120.

The network device 110 in the present application provides wireless communication functions. The network device 110 includes but is not limited to: an evolved node B (eNB), a radio network controller (RNC), a node B (NB), a base station controller (BSC), a base transceiver station (BTS), a home base station (e.g., a home evolved node B, or home node B (HNB)), a baseband unit (BBU), an access point (AP) in a wireless fidelity (Wi-Fi) system, a wireless relay node, a wireless backhaul node, a transmission point (TP), or a transmission and reception point (TRP), or the like. It may also be a next generation node B (gNB) or a TRP or TP in a 5th generation (5G) mobile communication system, or one or a group of antenna panels (including a plurality of antenna panels) of a base station in a 5G system, or a network node constituting a gNB or transmission point, such as a baseband unit (BBU) or a distributed unit (DU), or a base station in a beyond fifth generation (B5G) mobile communication system, a 6th generation (6G) mobile communication system, or a core network (CN), fronthaul, backhaul, a radio access network (RAN), a network slice, or a reader/writer in a radio frequency identification (RFID) system.

The number of terminal devices 120 in the present application may be one or more. A terminal device is also known as a user equipment (UE), an access terminal, a user unit, a user station, a mobile station, a mobile terminal, a remote station, a remote terminal, a mobile device, a user terminal, a terminal, a wireless communication device, a user agent, or a user apparatus. The terminal device 120 includes but is not limited to: a handheld device, a wearable device, an in-vehicle device, and an Internet of Things (IoT) device. Examples of such devices include: an electronic tag, a controller, a mobile phone, a pad, an e-book reader, a laptop computer, a desktop computer, a television, a game console, a mobile internet device (MID), an augmented reality (AR) terminal, a virtual reality (VR) terminal, and mixed reality (MR) terminal, a wearable device, a handle, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, a wireless terminal in remote medical surgery, a cellular phone, a cordless phone, a session initiation protocol (SIP) phone, a wireless local loop (WLL) station, a personal digital assistants (PDA), a set top box (STB), and a customer premise equipment (CPE).

The technical solutions provided in the embodiments of the present application may be applied to various communication systems, such as: a global system of mobile communication (GSM) system, a code division multiple access (CDMA) system, a wideband code division multiple access (WCDMA) system, a general packet radio service (GPRS), a long term evolution (LTE) system, an LTE frequency division duplex (FDD) system, an LTE time division duplex (TDD) system, an advanced long term evolution (LTE-A) system, a universal mobile telecommunication system (UMTS), a worldwide interoperability for microwave access (WiMAX) communication system, a 5G mobile communication system, a new radio (NR) system, an evolution system of an NR system, an LTE-based access to unlicensed spectrum (LTE-U) system, an NR-based access to unlicensed spectrum (NR-U) system, a terrestrial network (TN) system, a non-terrestrial network (NTN) system, a wireless local area network (WLAN), wireless fidelity (Wi-Fi), a cellular Internet of Things system, and a cellular passive Internet of Things system. The technical solutions provided in the embodiments of the present application may also be applied to subsequent evolution systems of 5G NR systems, as well as B5G, 6G, and subsequent evolution systems. In some embodiments of the present application, "NR" may also be referred to as a 5G NR system or a 5G system. The 5G mobile communication system may include non-standalone (NSA) and/or standalone (SA). In the embodiments of the present application, "terminal device" and "UE" are generally used interchangeably, but those skilled in the art can understand the meaning thereof.

The technical solutions provided in the embodiments of the present application may also be applied to machine type communication (MTC), long term evolution-machine (LTE-M) for inter-machine communication, a device to device (D2D) network, a machine to machine (M2M) network, an Internet of Things (IoT) network, or other networks. Here, the IoT network may, for example, include a vehicle to everything network. In the vehicle to everything network system, the communication manner is collectively referred to as vehicle to X (V2X, where X may represent anything), for example, V2X may include: vehicle to vehicle (V2V) communication, vehicle to infrastructure (V2I) communication, vehicle to pedestrian (V2P) communication, or vehicle to network (V2N) communication, or the like.

In some embodiments, the network device 110 and the terminal device 120 communicate with each other through some air interface technology, such as a Uu interface.

### Zero-power device

In outdoor environments, thanks to the global positioning system (GPS) and the independent cellular system, mobile terminal positioning can achieve very high accuracy. However, in indoor environments and environments with deep shadowing effects, satellite signals and cellular signals may be interrupted, making positioning problematic.

To improve positioning accuracy in indoor environments and environments with deep shadowing effects, the present application considers introducing the zero-power communication technology to assist positioning. The zero-power communication technology may also be referred to as at least one of the following: the ultra-low-power communication technology, the low-power communication technology, the ambient energy enabled IoT (ambient IoT/A-IoT/AMP) technology, the passive IoT technology, or the zero-power IoT technology. A communication device used to implement the zero-power communication technology may be referred to as a zero-power device, and the zero-power device may also be referred to as at least one of the following: an ultra-low-power device, a low-power device, a passive IoT device, or an ambient IoT/A-IoT/AMP device.

Specifically, from the perspective of power sources and usage, zero-power devices can be classified into the following three types.
(1) Passive device: the passive device does not need a built-in battery. When the passive device approaches the network device (e.g., a reader/writer in an RFID system), the passive device is located within a near field range formed by the antenna radiation of the network device. Therefore, the antenna of the passive device generates an induced current through electromagnetic induction, and the induced current drives a low-power chip circuit of the passive device, which enables tasks such as demodulating of forward link signals and modulating of backward link signals. For the backscatter link, the passive device can use a backscatter manner or an ultra-low-power active transmission manner for signal transmission. The passive device does not need a built-in battery to drive the forward link and the backward link, so the passive device can be considered a true zero-power device.
   In addition to not requiring a battery, a radio frequency circuit and a baseband circuit of the passive device are very simple. For example, components such as a low-noise amplifier (LNA), a power amplifier (PA), a crystal oscillator, and an analog-to-digital converter (ADC) are not needed. As a result, the passive device has many advantages such as small size, light weight, very low cost, and long service life.
   The passive device also supports other power harvesting manners to harvest ambient energy (e.g., light energy, thermal energy, kinetic energy, mechanical energy) to obtain energy for driving its circuits to achieve communication.
(2) Semi-passive device: the semi-passive device is not equipped with a conventional battery itself. The semi-passive device uses a radio frequency power harvesting module to harvest radio wave power, or uses a power harvesting module to harvest energy from the environment (e.g., light energy, thermal energy, kinetic energy, mechanical energy), and store the collected energy into an energy storage unit (e.g., a capacitor). After obtaining the power, the energy storage unit can drive a low-power chip circuit of the semi-passive device, which enables tasks such as demodulating of forward link signals and modulating of backward link signals. For the backscatter link, the semi-passive device can use a backscatter manner or a low-power active transmission manner for signal transmission.
   The semi-passive device does not need a built-in battery to drive the forward link or the backward link. Although the semi-passive device uses energy stored in a capacitor during operation, the energy is sourced from radio frequency energy. Therefore, the semi-passive device can also be considered a true zero-power device.
   The semi-passive device inherits many advantages of the passive device, such as small size, light weight, very low cost, and long service life.
(3) Active device: the active device may have a built-in battery. The battery is used to drive a low-power chip circuit of the active device, which enables tasks such as demodulating of forward link signals and modulating of backward link signals. The signal transmission of the backward link of the active device may be achieved without consuming the active device's own power, and the backward link transmission is achieved through a backscatter manner. Alternatively, the active device can achieve backward link transmission through a low-power active transmission manner. Although equipped with a built-in battery, such active device has ultra-low power consumption and complexity, allowing the battery capacity to be set within a small range, thereby achieving lower cost and smaller size. The built-in battery of the active device can also serve as an energy storage unit, which is used to store ambient energy collected by the power harvesting module, thus extending the maintenance cycle of the active device, or even making it maintenance-free.

In the active device, a built-in battery is used for power supply, which increases the communication distance and improves communication reliability. Therefore, the active device is applied in scenarios that have relative high requirements in terms of communication distance, reading latency, and other aspects.

FIG. 2 illustrates a zero-power communication system 200 provided in an exemplary embodiment of the present application, which includes a network device 210 and a zero-power device 220. The design of the network device 210 can refer to that of the network device 110. In FIG. 2, the network device 210 is exemplified as a reader/writer.

The zero-power device 220 includes a power harvesting module 321. Optionally, in addition to the power harvesting module 321, the zero-power device 220 further includes one or more of a backscatter communication module 322, a logic processing module 323, a sensor module 324, and a memory (not illustrated in the figure). Exemplarily, the logic processing module 323 includes a low-power computing module. It should be understood that the modules included in the zero-power device 220 illustrated in FIG. 2 are merely illustrative and not intended to be limiting.

Exemplarily, the power harvesting module 321 can harvest ambient energy, such as radio frequency energy, light energy, kinetic energy, mechanical energy, or solar energy, to power the various modules of the zero-power device 220. After obtaining power, the zero-power device 220 can receive signals from the network device 210 via a receiver, reflect signals to the network device 210 via the backscatter communication module 322, or transmit signals to the network device 210 via a transmitter (not illustrated in the figure). The data reflected or transmitted by the zero-power device 220 can be its own stored data (e.g., an identity identifier or pre-written information, e.g., the manufacturing date, brand, and manufacturer of a product). The sensor module 324 can include various types of sensors, and the zero-power device 220 can report the data collected by these various types of sensors based on the low-power mechanism. The memory is used to store basic information (e.g., item identifiers) or sensor data such as ambient temperature and ambient humidity.

The zero-power device 220 can utilize the logic processing module 323 to perform simple computational tasks such as signal demodulation, decoding or encoding, and modulation. The hardware design can be very simple, making the zero-power device 220 low in cost and small in size.

In the communication system illustrated in FIG. 1 or the zero-power communication system illustrated in FIG. 2, different forms of codes can be used to represent binary "1" and "0", that is, different pulse signals are used to represent "0" and "1". Typically, one of the following coding methods is used: non-return-to-zero (NRZ) encoding, Manchester encoding, unipolar return-to-zero (URZ) encoding, differential binary phase shift (DBPS) encoding, Miller encoding, or differential encoding.

FIG. 3 illustrates a schematic diagram of a principle of radio frequency power harvesting performed by the power harvesting module 321. The radio frequency power harvesting is a process of harvesting power from space electromagnetic waves based on the principle of electromagnetic induction. This process uses a radio frequency (RF) module, which is connected to a capacitor C and a load resistor RL that are connected in parallel to obtain the power required for driving the operation of the zero-power device through electromagnetic induction, such as the power for driving a low power consumption demodulation module, a modulation module, a sensor, and a memory readout. Based on this, the effect that the zero-power device does not need a conventional battery is realized.

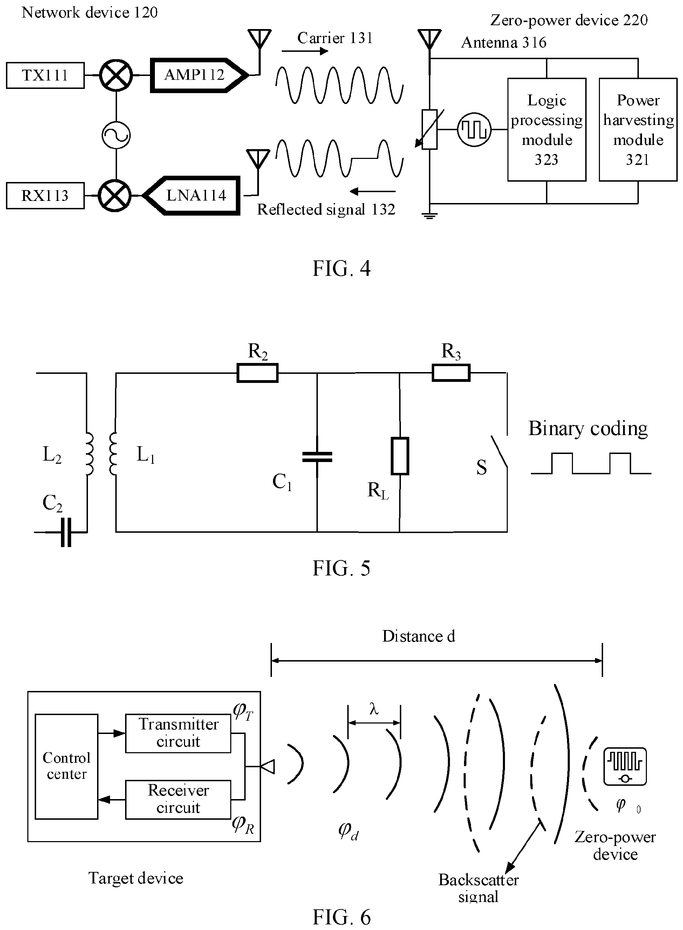

In backscatter communication, the backscatter signal may or may not be modulated. FIG. 4 illustrates a schematic diagram of a principle of modulated backscatter communication. The zero-power device 220 receives a wireless signal carrier 131 transmitted by a transmit (TX) module 111 of the network device 210 using an amplifier (AMP) 112, modulates the wireless signal carrier 131, loads to-be-transmitted information using a logic processing module 323, and harvests radio frequency energy using a power harvesting module 321. The zero-power device 220 uses antenna(s) 316 to radiate a modulated reflected signal 132. This information transmission process is referred to as backscatter communication. A receive (RX) module 113 of the network device 210 receives the modulated reflected signal 132 using a low-noise amplifier (LNA) 114. The backscatter and load modulation functions are inseparable. The load modulation adjusts and controls a circuit parameter of an oscillation circuit of the zero-power device 220 according to the timing of a data stream, causing a parameter such as the impedance of the zero-power device 220 to change accordingly, thereby completing the modulation process.

The load modulation technology primarily includes resistive load modulation and capacitive load modulation. FIG. 5 illustrates a schematic diagram of a principle of resistive load modulation. In the resistive load modulation, the load resistor RL is connected in parallel with a third resistor R3_{,} and the third resistor R3 is turned on or off by a switch S controlled by binary coding. The on and off of the third resistor R3 can cause a change in the voltage on the circuit. The load resistor RL is connected in parallel with a first capacitor C1 and in series with a second resistor R₂, and the second resistor R2 is connected in series with a first inductor L1. The first inductor L1 is coupled to a second inductor L2, and the second inductor L2 is connected in series with a second capacitor C2. Exemplarily, amplitude shift keying (ASK) can be implemented, that is, the signal modulation and transmission are implemented by adjusting the amplitude of the backscatter signal from the terminal device. Similarly, in the capacitive load modulation, the resonant frequency of the circuit may be changed by switching the capacitor on or off, thus implementing frequency shift keying (FSK), that is, the signal modulation and transmission are implemented by adjusting the operating frequency of the backscatter signal from the terminal device.

The zero-power device 220 can perform information modulation on an incoming wave signal using a load modulation manner, thereby implementing the process of the backscatter communication.

Therefore, the zero-power device has the following significant advantages: (1) it does not need to actively transmit a signal, thus eliminating the need for a complex radio frequency link such as a PA and a radio frequency filter; (2) it does not need to actively generate a high-frequency signal, thus eliminating the need for a high-frequency crystal oscillator; and (3) signal transmission via backscatter communication does not consume the zero-power device's own power.

Overall, compared to other terminal devices, the zero-power device offers numerous advantages, such as being free from conventional batteries and maintenance, having a small volume size, low complexity, low cost, and a long lifecycle. It supports a wide range of applications across various industries, such as logistics for vertical industries, object identification, smart warehousing, smart agriculture, power and power, and the industrial internet, as well as smart wearables, smart homes, smart control, and also services like environmental monitoring and positioning.

### Positioning principle of a zero-power device.

As previously described, the zero-power device has the advantages of low complexity, low cost, maintenance-free and battery-free, and can obtain the power required for communication from the environment through power harvesting and communicate in a backscatter manner or a low-power active transmission manner. Therefore, the zero-power device can be deployed in high density and at a large scale. During deployment, the zero-power device can serve as an anchor device to assist in the positioning of a target device, thereby improving positioning accuracy. In the embodiments of the present application, the target device is a device that needs to obtain its location, i.e., a device that needs to be positioned. An anchor device is a device with a known location, and is used to assist in determining the location of the target device. The positioning method using the zero-power device provided in the embodiments of the present application is applicable to a wide range of scenarios, such as cargo positioning in logistics, animal positioning on farms in the livestock industry, low-power positioning for individual users and objects, and indoor positioning in shopping malls.

In the embodiments of the present application, it is supported to estimate the distance between the target device and the anchor device based on signal strength and phase characteristics of the signal. Optionally, during the positioning process, it is also necessary to obtain location information of the anchor device. The location information of the anchor device may be fixed, or known to the target device, or transmitted by the anchor device to the target device.

Regarding the signal strength, it is understood that due to the influence of propagation characteristics such as attenuation and scattering, the greater the distance between the target device and the anchor device, the weaker the signal strength. Based on the measured signal strength, the distance between the two signal-transceiving parties can be estimated. For example, based on the strength of the signal transmitted by the target device and the strength of the backscatter signal received by the target device from the zero-power device, the distance between the target device and the zero-power device can be inferred.

In some embodiments, the signal strength may be represented by at least one of the following: a reference signal receiving power (RSRP) value, a reference signal strength indicator (RSSI) value, a reference signal receiving quality (RSRQ) value, a signal to interference plus noise ratio (SINR) value, a cross link interference (CLI) value, or channel state information (CSI).

Regarding the phase characteristics of the signal, the phase shift/phase rotation characteristic of the signal in backscatter communication are primarily utilized. As illustrated in FIG. 6, the target device transmits a radio frequency signal to the zero-power device. The signal has frequency f, wavelength λ, and the speed c of light satisfies c=f*λ. The distance between the zero-power device and the target device is assumed to be d. When the zero-power device receives the radio frequency signal transmitted by the target device, it can backscatter this signal to transmit a backscatter signal to the target device. The backscatter signal may be modulated to carry information transmitted by the zero-power device, or it may be unmodulated. When the signal travels from the zero-power device to the target device, it undergoes a phase rotation of ${φ}_{d} = \left(2πf\frac{d}{c}\right) mod \left(2π\right)$. Therefore, when the signal travels from the target device to the zero-power device and then returns from the zero-power device to the target device, it undergoes a phase rotation of ${φ}_{2 d} = \left(2πf\frac{2 d}{c}\right) mod \left(2π\right)$. Theoretically, the distance d between the target device and the zero-power device can be calculated by measuring the phase difference corresponding to the distance d or 2d. In the embodiments of the present application, "mod" denotes the modulo operation.

However, in actual signal transmission and reception, in addition to the phase rotation caused by the distance d, there are other phase rotations. In the embodiments of the present application, these other phase rotations other than the phase rotation caused by the distance d are referred to as phase rotation errors. For example, in practice, the phase rotation caused over a round trip of the signal is $\left(2πf\frac{2 d}{c}+{φ}_{e}\right) mod \left(2π\right)$, where φₑ denotes the phase rotation error, and this error may originate from the circuit structures of the target device or the zero-power device, or from various processing steps during signal reception and transmission. For example, as illustrated in FIG. 6, *φ_{T}* denotes the phase rotation introduced by the transmitter circuit of the target device, *φ_{R}* denotes the phase rotation introduced by the receiver circuit of the target device, and *φ*₀ denotes the phase rotation introduced by the circuit structure of the zero-power device. All of these belong to the phase rotation error φₑ that can cause positioning errors. Therefore, the distance d estimated based solely on the phase characteristics of a signal at a single frequency inevitably contains errors. If high-precision positioning is required, it is necessary to further consider how to avoid the negative impact of these phase rotation errors on positioning accuracy.

To address this, the embodiments of the present application consider using the phase characteristics of signals at multiple different frequencies for positioning. In the embodiments of present application, taking two signals of different frequencies as an example, the target device transmits two signals of different frequencies to the zero-power device. For example, the target device transmits signal S1 at frequency fl and signal S2 at frequency f2.

If considering the phase rotation caused by one-way propagation, i.e., the phase rotation related to the distance d, the phase rotation caused by the signal S1 is ${φ}_{1} ′ = \left(2{πf}_{1}\frac{d}{c}+{φ}_{e}′\right) mod \left(2π\right)$, and the phase rotation caused by the signal S2 is ${φ}_{2} ′ = \left(2{πf}_{2}\frac{d}{c}+{φ}_{e}′\right) mod \left(2π\right)$, where φₑ' denotes the phase rotation error in one-way propagation. By subtracting φ₂' from φ₁', one-way phase difference Δ*φ*' is obtained through $Δ φ ′ = \left[2π\left({f}_{1}-{f}_{2}\right)\frac{d}{c}\right] mod \left(2π\right) = \left(2π⋅Δf⋅\frac{d}{c}\right) mod \left(2π\right)$. In this way, the effect of φₑ' can be eliminated, and the one-way distance d is obtained through $d = \frac{c ⋅ Δφ ′}{2 π ⋅ Δf} mod \left(\frac{c}{Δf}\right)$.

If considering the phase rotation caused by a round-trip propagation, i.e., the phase rotation related to the distance 2d, the phase rotation caused by the signal S1 is ${φ}_{1} = \left(2{πf}_{1}\frac{2 d}{c}+{φ}_{e}\right) mod \left(2π\right)$, which travels from the target device to the zero-power device and is then backscattered by the zero-power device to the target device; and the phase rotation caused by the signal S2 is ${φ}_{2} = \left(2{πf}_{2}\frac{2 d}{c}+{φ}_{e}\right) mod \left(2π\right)$, which travels from the target device to the zero-power device and is then backscattered by the zero-power device to the target device. Here, φₑ denotes the phase rotation error in the round-trip propagation. By subtracting φ₂ from φ₁, round-trip phase difference Δ*φ* is obtained through $Δ φ = \left[2π\left({f}_{1}-{f}_{2}\right)\frac{2 d}{c}\right] mod \left(2π\right) = \left(2π⋅Δf⋅\frac{2 d}{c}\right) mod \left(2π\right)$. In this way, the effect of φₑ can be eliminated, and the round-trip distance 2d and the one-way distance d are obtained through $2 d = \frac{c ⋅ Δφ}{2 π ⋅ Δf} mod \left(\frac{c}{Δf}\right) , d = \frac{c ⋅ Δφ}{4 π ⋅ Δf} mod \left(\frac{c}{2 Δf}\right)$.

It can be seen that the supported positioning distance d is related to the frequency difference Δf. The smaller the frequency difference Δf, the larger the supported positioning distance d. When performing positioning based on the phases of signals at different frequencies, the maximum frequency difference between signals needs to be determined based on the maximum positioning distance and the target scenario in which the zero-power device is applied. For example, when supporting a maximum positioning range of 300 meters, the frequency difference Δf of less than 1MHz yields a better positioning effect.

It can be understood that the number of signals at different frequencies is not limited to two. The more signals there are, the better the accuracy of the positioning result, but more resource consumption will be incurred. Therefore, the number of signals may be adjusted according to the actual situation, which will not be limited in the present application.

Considering the initial phase of the signal transmitted from the zero-power device, the embodiments of the present application provides the following three cases to discuss how to determine the distance d based on the phase difference.

In Case 1, the zero-power device can control the initial phase of signal transmission and can transmit signals with the same initial phase at different frequencies. In this way, when the receiving end receives signals at different frequencies (e.g., f1 and f2) transmitted by the same zero-power device, since the initial phases of the signals are the same, the receiving end can obtain the phase difference between the two received signals at different frequencies, which can be approximated as $Δ φ = \left[2π\left({f}_{1}-{f}_{2}\right)\frac{d}{c}\right] mod \left(2π\right)$ (assuming that the phase rotations introduced by the transmitting end and the receiving end cancel each other out). Thus, the distance between the zero-power device and the receiving end can be approximated as $d = \frac{c ⋅ Δφ}{2 π ⋅ Δf} mod \left(\frac{c}{Δf}\right)$. It should be noted that, in practice, the phase difference between the two signals at different frequencies calculated by the receiving end also contains the above phase rotation error φₑ, and the receiving end can use other methods to estimate and eliminate φₑ.

Case 1 is actually an ideal case.

In Case 2, the zero-power device can maintain a fixed initial phase difference Δ*φᵢ* when transmitting signals at different frequencies, or the zero-power device can determine the initial phase difference Δ*φᵢ*' when transmitting signals at different frequencies and report this phase difference Δ*φᵢ*' to the receiving end. In this way, according to the fixed initial phase difference Δ*φᵢ* or the initial phase difference Δ*φᵢ*' reported by the zero-power device, the receiving end can determine the phase difference between the two received signals at different frequencies, which is approximated as $Δ φ = \left[2π\left({f}_{1}-{f}_{2}\right)\frac{d}{c}\right] mod \left(2π\right)$ (assuming that the phase rotations introduced by the transmitting end and receiving end cancel each other out). Thus, the distance between the zero-power device and the receiving end can be approximated as $d = \frac{c ⋅ Δφ}{2 π ⋅ Δf} mod \left(\frac{c}{Δf}\right)$. Similar to Case 1, in practice, the phase difference between the two signals at different frequencies calculated by the receiving end contains the above phase rotation error φₑ, and the receiving end can use other methods to estimate and eliminate φₑ.

Case 2 is a sub-ideal case.

In Case 3, when the zero-power device transmits a signal (which may be backscatter or active transmission), the initial phase has an association with the phase of other signals (e.g., the phases are continuous phases or the same phase, or have a known or fixed phase offset). In this way, the receiving end can determine the distance between the zero-power device and itself by using a phase difference method based on the association between the signal transmitted by the zero-power device and the other signal.

Typically, the zero-power device can communicate in a backscatter manner, so that there is an association between a phase of an outgoing signal and a phase of an incident signal during backscatter communication. For example, device A may provide a carrier required for backscatter to the zero-power device, and the zero-power device performs backscatter based on the carrier transmitted by device A. After receiving the backscatter signal from the zero-power device, device A can determine a phase difference associated with the distance d according to (the phase of) the received signal and (the phase of) the signal transmitted by device A. The phase difference corresponding to the signal at frequency f1 is $Δφ \left({f}_{1}\right) = \left(2π*{f}_{1}*\frac{2 d}{c}\right) mod \left(2π\right) + {Δφ}_{3} + {Δφ}_{4}$. Here, Δ*φ*₃ is used to denote the association between the incident signal and the outgoing signal during the backscatter communication performed by the zero-power device. In different implementations, when the phase of the incident signal and the phase of the outgoing signal are continuous or identical, it may be considered that Δφ₃=0. When there is a phase deviation between the phase of the incident signal and the phase of the outgoing signal, a phase offset between the phase of the incident signal and the phase of the outgoing signal may be considered as Δφ₃. Δφ₄ is used to denote the phase offset caused by signal transmission from the antenna(s) or the implementation of other components. Correspondingly, the phase difference corresponding to the signal at frequency f2 is $Δφ \left({f}_{2}\right) = \left(2π*{f}_{2}*\frac{2 d}{c}\right) mod \left(2π\right) + {Δφ}_{3}^{′} + {Δφ}_{4}^{′}$. Here, ${Δφ}_{3}^{′}$ is similar to Δφ₃, and ${Δφ}_{4}^{′}$ is similar to Δφ₄. Thus, the phase difference between the backscatter signals at frequencies f1 and f2 can be expressed as: $Δφ \left({f}_{1}-{f}_{2}\right) = \left[2π*\left({f}_{1}-{f}_{2}\right)*\frac{2 d}{c}\right] mod \left(2π\right) + \left({Δφ}_{3}-{Δφ}_{3}′\right) + \left({Δφ}_{4}-{Δφ}_{4}′\right)$. In practice, ${Δφ}_{3}^{′}$, Δφ₃, ${Δφ}_{4}^{′}$, Δφ₄, (Δφ₃-Δφ₃'), and (Δφ₄-Δφ₄') represent the above phase rotation errors, which can be estimated and partially eliminated.

In some embodiments, when the zero-power device performs backscatter, it may perform backscatter on the carrier at the original frequency. That is, the incident signal is at frequency f1, and the backscattered outgoing signal is also at f1.

In some embodiments, when the zero-power device performs backscatter, it may perform backscatter on another carrier associated with the carrier at the original frequency. That is, if the frequency of the incident signal is f1, and the frequency of the outgoing signal of the backscatter is f2, then there is an association or mapping relationship between frequency f1 and frequency f2. More specifically, for example, in an FDD system, f1 is the DL frequency, and f2 is the UL frequency paired with f1.

Case 3 is relatively easy to implement.

Based on the above content, the distance between the target device and the anchor device can be obtained, which can satisfy distance measurement requirement. However, in some cases, it is desirable to obtain the accurate location information of the target device, then it may not be sufficient to obtain only the distance between the target device and one anchor device. Generally, at least three anchor devices are required to determine the location information of the target device. The location information in the embodiments of the present application may be absolute location information, such as latitude and longitude information, or relative location information, such as location information relative to a reference point, or location information in a three-dimensional coordinate system.

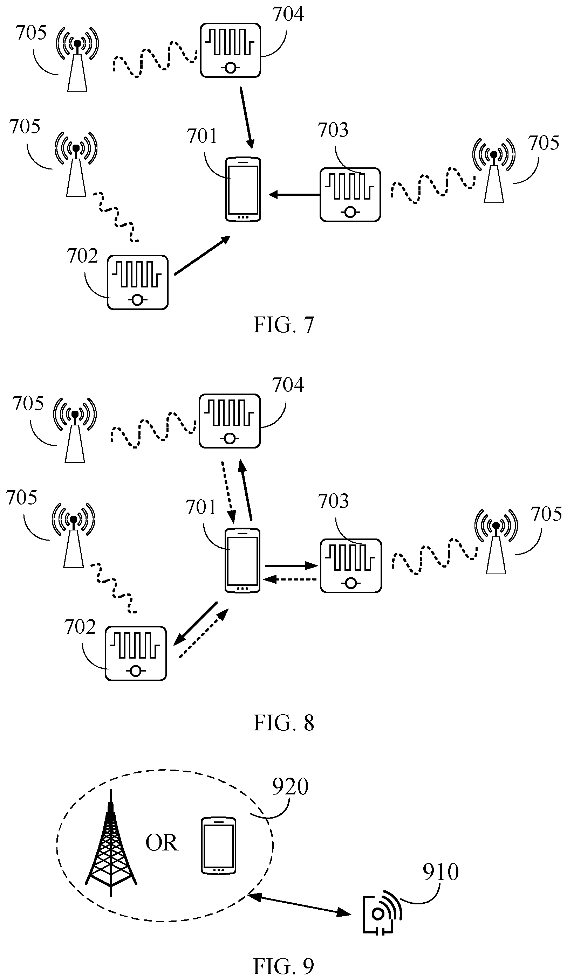

FIGs. 7 and 8 illustrate two schematic diagrams of positioning provided in exemplary embodiments of the present application, where three anchor devices are used to assist in positioning the target device. Certainly, in practical applications, the number of anchor devices may be greater or less. In the embodiments of the present application, three anchor devices are taken as an example for implementing auxiliary positioning, which does not imply a limitation on the number of anchor devices.

In FIG. 7, the positioning process is performed based on the reception, by a target device 701, of signals actively transmitted by the anchor devices 702, 703, and 704. That is, the three anchor devices actively transmit signals to the target device, and it is unnecessary for the target device to transmit trigger signals to the anchor devices to initiate the positioning process. For example, the anchor devices may transmit signals periodically, or the anchor devices may actively transmit signals when power reaches a certain threshold, and so on.

In FIG. 8, the positioning process is triggered by the target device 701. The target device 701 transmits trigger signals, such as scheduling signals, to schedule the anchor devices 702, 703, and 704 to transmit or reflect signals to the target device 701. As another example, the target device transmits a broadcast/groupcast/multicast signal to trigger the anchor devices 702, 703, and 704 to transmit or reflect signals to the target device 701.

In embodiments of the present application, the target device may be the terminal device 120 as illustrated in FIG. 1, the zero-power device 220 as illustrated in FIG. 2, or another communication device with signal transmission and reception capabilities.

In embodiments of the present application, as the zero-power device, the anchor device may be an active device with a built-in battery, or a passive or semi-passive device that harvests ambient energy (such as light energy, thermal energy, kinetic energy, mechanical energy, or radio frequency energy). Therefore, FIGs. 7 and 8 further illustrate an optional energy supply device 705, which can provide energy (e.g., radio frequency energy) to various anchor devices.

As can be seen from the above description, the zero-energy device provided in the embodiments of the present application supports both an active transmission manner and a backscatter communication manner. Here, the backscatter communication manner can be applied to positioning services to achieve a positioning method with high accuracy, high flexibility, low power consumption, and low cost.

For ease of explanation, terms such as first device, second device, and third device will be introduced below. The first device may be implemented as a communication device such as the above zero-energy device, ultra-low-energy device, low-energy device, passive IoT device, or ambient IoT/A-IoT/AMP device. The second device may be, for example, the terminal device 120 or the network device 110 illustrated in FIG. 1, an intermediate node within the communication system, a customer premise equipment (CPE), an assisting node, or a dedicated positioning device. The third device may be, for example, the terminal device 120 or the network device 110 illustrated in FIG. 1, the network device 210 illustrated in FIG. 2, a core network entity (e.g., a location management function, LMF), or a central controller.

In the embodiments of the present application, the first device can determine which transmission manner to use based on scheduling or triggering of other devices, and it can also autonomously determine the transmission manner based on different conditions (e.g., different power levels, different available ambient energy).

**Next, two solutions for determining the signal transmission manner will be introduced in detail. These two solutions can be freely combined with the various embodiments provided in the present application.**

In Solution 1, the first device determines the signal transmission manner based on received indication information.

It should first be noted that the indication information may be transmitted by the second device, by the second device under the control/scheduling of the third device, or by the third device. However, regardless of which communication device the indication information originates from, it indicates that the first device determines its own signal transmission manner under the control or triggering of other devices.

In some embodiments, the indication information is implemented as at least one of the following: control signaling, a system message, dynamic signaling, or a sequence. The dynamic signaling may include, for example, downlink control information (DCI). The control signaling may include, for example, RRC signaling, or a media access control (MAC) control element (CE).

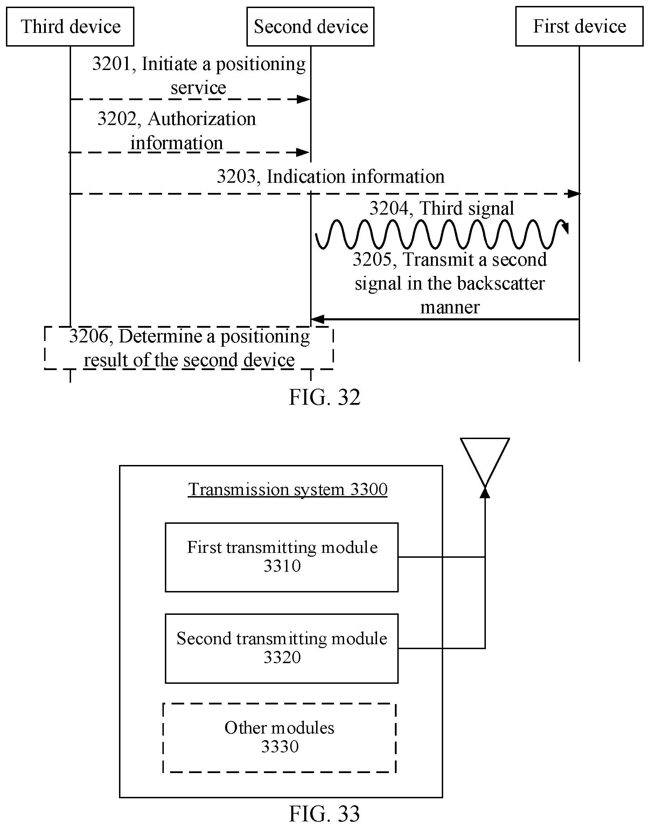

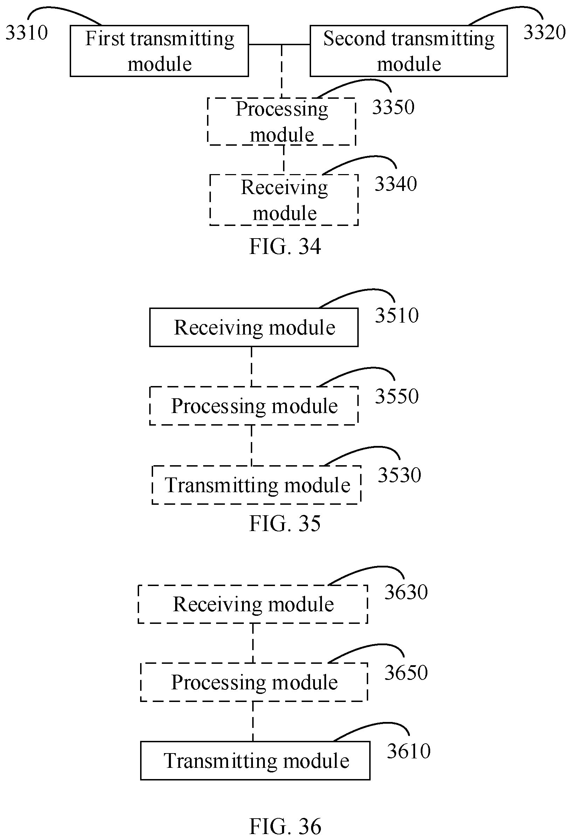

In some embodiments, the indication information explicitly indicates the signal transmission manner of the first device. For example, a value of a field in the control signaling indicates the active transmission communication manner or the backscatter communication manner. In an example where the signal transmission manner of the first device is scheduled via DCI, a first bit field is set in this DCI. In a case where the first bit field has a first value, it indicates that the active transmission communication manner is to be used, for example, using a first transmitting module 3310 in FIG. 33 or FIG. 34 to operate. In a case where the first bit field has a second value, it indicates that the backscatter communication manner is to be used, for example, using the second transmitting module 3320 in FIG. 33 or FIG. 34 to operate. The first value is different from the second value. Exemplarily, the first value may be "1" or "True", and the second value may be "0" or "False". Exemplarily, the second value may be "1" or "True", and the first value may be "0" or "False".

In some embodiments, the indication information implicitly indicates the signal transmission manner of the first device. For example, the control signaling used to schedule/trigger the first device to use the active transmission communication manner is different from the control signaling used to schedule/trigger the first device to use the backscatter communication manner. If the first device receives the corresponding control signaling, it indicates the corresponding signal transmission manner.

In an example where the signal transmission manner of the first device is scheduled via DCI, when the first device is scheduled for communication via a first DCI format (e.g., DCI format A), it indicates that the first device is scheduled to operate using the first transmitting module, i.e., using the active transmission communication manner. When the first device is scheduled for communication via a second DCI format (e.g., DCI format B), it indicates that the first device is scheduled to operate using the second transmitting module, i.e., using the backscatter communication manner.

In an example where the signal transmission manner of the first device is scheduled via a sequence, when the first device is scheduled/triggered for communication via a first sequence, it indicates that the first device is scheduled to operate using the first transmitting module, i.e., using the active transmission communication manner. When the first device is scheduled/triggered for communication via a second sequence, it indicates that the first device is scheduled to operate using the second transmitting module, i.e., using the backscatter communication manner.

In Solution 2, the first device autonomously determines the signal transmission manner.

The first device can autonomously determine which signal transmission manner to use based on a determination condition, and the determination condition may be predefined by a communication protocol or pre-configured. Exemplarily, the determination condition is related to at least one of the following: power level, ambient energy type, received signal strength, payload size, or service type. For example, if the power level is higher than threshold A, the first transmitting module is used to operate, i.e., using the active transmission communication manner; if the power level is lower than threshold B, the second transmitting module is used to operate, i.e., using the backscatter communication manner. For example, if the ambient energy is radio frequency energy, the second transmitting module is used to operate, i.e., using the backscatter communication manner; if the ambient energy is light energy, the first transmitting module is used to operate, i.e., using the active transmission communication manner. For example, if the received signal strength is higher than threshold C, the first transmitting module is used to operate, i.e., using the active transmission communication manner; if the received signal strength is lower than threshold D, the second transmitting module is used to operate, i.e., using the backscatter communication manner. For example, when data transmission is required, the first transmitting module is used to operate, i.e., using the active transmission communication manner; when positioning assistance is required, the second transmitting module is used to operate, i.e., using the backscatter communication manner.

The present application uses the payload size as an example for illustrative description. For example, in a case where the number of information bits to be transmitted by the first device is greater than or equal to a first threshold, the first transmitting module is used to operate, i.e., using the active transmission communication manner. In a case where the number of information bits to be transmitted by the first device is less than a second threshold (in particular, including a case where the number of information bits to be transmitted is 0), the second transmitting module is used to operate, i.e., using the backscatter communication manner.

Optionally, the first threshold is the same as or different from the second threshold.

Optionally, the first threshold and/or the second threshold are configured by a network device. Exemplarily, the first threshold is semi-statically configured by the network device via RRC signaling, MAC CE, or the like, or dynamically configured via DCI. The second threshold is semi-statically configured by the network device via RRC signaling, MAC CE, etc., or dynamically configured via DCI.

Optionally, the first threshold and/or the second threshold are specified in a communication protocol. Exemplarily, the communication protocol specifies values of the first threshold and/or the second threshold, or the communication protocol specifies a calculation method of the first threshold and/or the second threshold.

Optionally, the first threshold and/or the second threshold are determined based on the implementation of the first device. Exemplarily, the first threshold and/or the second threshold are determined by the network device based on capability information reported by the first device. Exemplarily, the first threshold and/or the second threshold are autonomously determined by the first device based on its own capabilities.

In some embodiments, in a case where a first condition is satisfied, a first signal is transmitted using a first transmitter, where the first condition includes at least one of the following: first indication information is received, and the first indication information is used to indicate the first device to operate using the first transmitter; or the number of bits of the first information is greater than or equal to a first threshold. For the explicit and implicit indication methods of the first indication information, reference may be made to Solution 1.

In some embodiments, in a case where a second condition is satisfied, a second signal is transmitted in the backscatter manner using a second transmitter, where the second condition includes at least one of the following: second indication information is received, and the second indication information is used to indicate the first device to operate using the second transmitter; the number of bits of the first information is less than or equal to a second threshold; or third indication information is received, and the third indication information is used to indicate the first device to perform a positioning service. For the explicit and implicit indication methods of the second indication information, reference may be made to Solution 1.

**In the embodiments of the present application, time-frequency resources used by the first device to transmit signals are further designed as follows.**

To facilitate distinction between various signals, in the embodiments of the present application, the signal actively transmitted by the first device using the first transmitting module is referred to as the first signal, and the signal backscattered by the first device using the second transmitting module is referred to as the second signal. The first signal is used to carry the first information, and the second signal is used to carry the first information and/or used for positioning. The first information may be data information or control information. In practice, the information carried by the first signal and the information carried by the second signal may be the same or different. The embodiments of the present application use the first information merely as an example for illustrative description, which does not imply a limitation.

As can be seen from the foregoing description, during backscatter communication, other devices need to provide a carrier signal (a carrier/a carrier signal) to the first device. For ease of explanation, the externally provided carrier may be referred to as a third signal. Therefore, the second signal may also be understood as a backscatter signal of the third signal, and the third signal may also be understood as a carrier of the second signal. In the embodiments of the present application, the carrier signal may also be equivalently referred to as a carrier. In practice, the carrier of the second signal may also be in the form of a sequence. The present application uses the third signal as an example for illustrative description, but this does not preclude the method of providing a carrier to the first device via a sequence.

In some embodiments, the third signal is transmitted by a second device, or is transmitted by the second device under the control/scheduling of a third device, or the third signal may be transmitted by a third device. Examples of the second device and the third device are as described previously and will not be repeated here.

In some embodiments, the first device negotiates time-frequency resources for the second signal using the first transmitting module, and then transmits the second signal in the backscatter manner by using the second transmitting module. Here, the first device may negotiate the time-frequency resources for the second signal with the second device and/or the third device.

In some embodiments, the first device transmits a fourth signal using the first transmitting module, where the fourth signal is used to negotiate the time-frequency resources used for the second signal.

In some embodiments, the first device receives a fifth signal, where the fifth signal is used to configure the time-frequency resources used for the second signal, or is used to configure an offset between the time-frequency resources used for the second signal and time-frequency resources used for a reference signal.

### Regarding time-domain resources:

In some embodiments, the time-domain resources used for the second signal are specified in a communication protocol, configured by the second device, configured by the second device under the control of the third device, or configured by the third device.

In some embodiments, the time-domain resources used for the second signal are determined based on the time-domain resources used for the reference signal. The reference signal refers to a signal received by the first device, and the reference signal includes at least one of the following signals: control signaling from the second device, scheduling signaling from the second device, a data signal from the second device, the third signal from the second device, control signaling from the third device, scheduling signaling from the third device, a data signal from the third device, or the third signal from the third device. Exemplarily, the time-domain resources used for the second signal are associated with the time-domain resources used for the third signal. Exemplarily, a mapping relationship exists between the time-domain resources used for the second signal and the time-domain resources used for the third signal.

In some embodiments, a first offset exists between the time-domain resources used for the second signal and the time-domain resources used for the reference signal. The first offset is specified in a communication protocol, configured by the second device, configured by the second device under the control of the third device, or configured by the third device. The first offset is, for example, a time-domain offset Δt or a time-domain offset of x time-domain units. In the embodiments of the present application, the time-domain unit includes at least one of the following: a frame, a subframe, a slot, a mini-slot, a sub-slot, a symbol, a symbol group, or a time-domain unit based on other time-domain units.

In some embodiments, the time-domain resources used for the second signal are specified in the communication protocol. Alternatively, the second device configures the time-domain resources used for the second signal. Alternatively, the second device, under the control of the third device, configures the time-domain resources used for the second signal. Alternatively, the third device configures the time-domain resources used for the second signal.

In some embodiments, the first offset of the time-domain resources used for the second signal relative to the time-domain resources used for the reference signal is specified in the communication protocol. Alternatively, the second device configures the first offset of the time-domain resources used for the second signal relative to the time-domain resources used for the reference signal. Alternatively, the second device, under the control of the third device, configures the first offset of the time-domain resources used for the second signal relative to the time-domain resources used for the reference signal. Alternatively, the third device configures the first offset of the time-domain resources used for the second signal relative to the time-domain resources used for the reference signal.

In some embodiments, the carrier provided by another device to the first device is a specific sequence, and the first device determines the time-domain resources used for the second signal based on this specific sequence. Exemplarily, the specific sequence is associated with a starting position of the time-domain resources used for the second signal.

### Regarding frequency-domain resources:

In some embodiments, the frequency-domain resources used for the second signal are specified in a communication protocol, configured by the second device, configured by the second device under the control of the third device, or configured by the third device.

In some embodiments, the frequency-domain resources used for the second signal are the same as or different from the frequency-domain resources used for the third signal. Exemplarily, the frequency-domain resources used for the second signal are the same as the frequency-domain resources used for the third signal, that is, the first device transmits the second signal in the backscatter manner on the same frequency at which the first device receives the carrier signal. Exemplarily, a second offset exists between the frequency-domain resources used for the second signal and the frequency-domain resources used for the third signal, that is, the second signal and the third signal use different frequency-domain resources. The second offset is, for example, a frequency-domain offset Δf or a frequency-domain offset of y frequency-domain units. The second offset is specified in a communication protocol, configured by the second device, configured by the second device under the control of the third device, or configured by the third device. In the embodiments of the present application, the frequency-domain unit includes at least one of the following: bandwidth, a carrier, a subcarrier, a physical resource block (PRB), a resource block group (RBG), a bandwidth part (BWP), a sub-band, a sub-channel, or a unit based on other frequency-domain units.

In some embodiments, the frequency-domain resources used for the second signal are determined based on the frequency-domain resources used for the reference signal. The reference signal is as described previously. Exemplarily, the frequency-domain resources used for the second signal are associated with the frequency-domain resources used for the third signal. Exemplarily, a mapping relationship exists between the frequency-domain resources used for the second signal and the frequency-domain resources used for the third signal. Exemplarily, the frequency-domain resources used for the second signal are determined based on the second offset and the frequency-domain resources used for the third signal.

In some embodiments, the frequency-domain resources used for the second signal are specified in the communication protocol. Alternatively, the second device configures the frequency-domain resources used for the second signal. Alternatively, the second device, under the control of the third device, configures the frequency-domain resources used for the second signal. Alternatively, the third device configures the frequency-domain resources used for the second signal.

In some embodiments, the second offset of the frequency-domain resources used for the second signal relative to the frequency-domain resources used for the reference signal is specified in the communication protocol. Alternatively, the second device configures the second offset of the frequency-domain resources used for the second signal relative to the frequency-domain resources used for the reference signal. Alternatively, the second device, under the control of the third device, configures the second offset of the frequency-domain resources used for the second signal relative to the frequency-domain resources used for the reference signal. Alternatively, the third device configures the second offset of the frequency-domain resources used for the second signal relative to the frequency-domain resources used for the reference signal.

In some embodiments, the carrier provided by another device to the first device is a specific sequence, and the first device determines the frequency-domain resources used for the second signal based on this specific sequence. Exemplarily, the specific sequence is associated with a starting position of the frequency-domain resources used for the second signal.

Similar to the time-frequency resources for the second signal, the time-frequency resources for the first signal may also be specified in the communication protocol, configured by the second device, configured by the second device under the control of the third device, or configured by the third device.

In some embodiments, the time-frequency resources for the first signal may also be determined based on the time-frequency resources used for the reference signal. For example, an association, a mapping relationship, or an offset may exist between the time-frequency resources for the first signal and the time-frequency resources used for the reference signal. For related designs, reference may be made to the second signal, and details are not repeated here.

**Specifically, considering the positioning process and participating nodes, the embodiments of the present application provide at least the following four communication solutions:**
In Solution 1, the second device receives the second signal transmitted by the first device in the backscatter manner, the first device assists in the positioning of the second device, and the second device determines the distance between itself and the first device.

For the specific transmission manner used by the first device, reference may be made to the aforementioned "Solution 1", in which the first device determines the signal transmission manner based on received indication information. Exemplarily, the second device transmits the first indication information to the first device which is used to indicate the first device to use the active transmission communication manner, and the first indication information may be indicated explicitly or implicitly. Exemplarily, the second device transmits the second indication information to the first device which is used to indicate the first device to use the backscatter communication manner, and the second indication information may be indicated explicitly or implicitly. Exemplarily, the second device transmits the third indication information to the first device, and the third indication information is used to indicate the first device to perform a positioning service. Then, upon receiving the third indication information, the first device uses the backscatter communication manner.

In some embodiments, the second device provides a carrier signal (i.e., the third signal, which may also be implemented as a sequence) to the first device, and the first device transmits the second signal in the backscatter manner. The time-frequency resources used for the second signal are as described previously.

In Solution 2, the second device, under the control of the third device, receives the second signal transmitted by the first device in the backscatter manner, the first device assists in the positioning of the second device, and the second device determines the distance between itself and the first device.

For the specific transmission manner used by the first device, reference may be made to the aforementioned "Solution 1", in which the first device determines the signal transmission manner based on received indication information. Reference may be made to Solution 1 here.

In some embodiments, the third device directly transmits indication information to the first device to indicate which transmission manner the first device should use. That is, when indicating the transmission manner used by the first device, the third device can directly configure the first device without the involvement of the second device.

In some embodiments, the second device provides a carrier signal (i.e., the third signal, which may also be implemented as a sequence) to the first device, and the first device transmits the second signal in the backscatter manner. The time-frequency resources used for the second signal are as described previously.

In some embodiments, that the second device, under the control of the third device, receives the second signal transmitted by the first device in the backscatter manner may be understood as follows: before receiving the second signal transmitted by the first device in the backscatter manner, the second device receives indication information, control signaling, or authorization information from the third device, which indicates that the communication between the second device and the first device is actually triggered by the third device. Optionally, before the second device receives the second signal transmitted by the first device in the backscatter manner, the third device transmits configuration information of the first device to the second device.

In Solution 3, the second device, under the control of the third device, provides the carrier signal to the first device, and the third device receives the second signal transmitted by the first device in the backscatter manner. The first device assists in the positioning of the second device, and the third device determines the distance between the second device and the first device. Alternatively, the first device assists in the positioning of the third device, and the third device determines the distance between the first device and the third device. Alternatively, the first device assists in the positioning of the third device, and the third device determines the distance between the second device and the third device.

For the specific transmission manner used by the first device, reference may be made to the aforementioned "Solution 1", in which the first device determines the signal transmission manner based on received indication information. Reference may be made to Solution 1 here.

In some embodiments, that the second device, under the control of the third device, provides the carrier signal (i.e., the third signal, which may also be implemented as a sequence) to the first device may be understood as follows: before providing the carrier signal to the first device, the second device receives indication information, control signaling, or authorization information from the third device, which indicates that the communication between the second device and the first device is actually triggered by the third device. Optionally, before the second device provides the carrier signal to the first device, the third device transmits the configuration information of the first device to the second device.

In some embodiments, the first device transmits the second signal in the backscatter manner. The time-frequency resources used for the second signal are as described previously.

In some embodiments, the third device receives the second signal transmitted by the first device in the backscatter manner and determines the distance between the second device and the first device.

In Solution 4, the third device provides the carrier signal to the first device; the second device, under the control of the third device, receives the second signal transmitted by the first device in the backscatter manner; and the first device assists in the positioning of the second device, and the second device determines the distance between itself and the first device.

For the specific transmission manner used by the first device, reference may be made to the aforementioned "Solution 1", in which the first device determines the signal transmission manner based on received indication information.

In some embodiments, the third device directly transmits indication information to the first device to indicate which transmission manner the first device should use. That is, when indicating the transmission manner used by the first device, the third device can directly configure the first device without the involvement of the second device.

In some embodiments, the third device provides the carrier signal (i.e., the third signal, which may also be implemented as a sequence) to the first device. The first device transmits the second signal in the backscatter manner. The time-frequency resources used for the second signal are as described previously.

In some embodiments, the first device transmits the second signal in the backscatter manner. The time-frequency resources used for the second signal are as described previously.

In some embodiments, that the second device, under the control of the third device, receives the second signal transmitted by the first device in the backscatter manner may be understood as follows: before receiving the second signal transmitted by the first device in the backscatter manner, the second device receives indication information, control signaling, or authorization information from the third device, which indicates that the communication between the second device and the first device is actually triggered by the third device. Optionally, before the second device receives the second signal transmitted by the first device in the backscatter manner, the third device transmits the configuration information of the first device to the second device.

It should be noted that, in the four solutions described above, the second signal transmitted by the first device in the backscatter manner may be received by the first device or the third device. The distance between the first device and the second device may be determined by the first device or the third device.

Exemplarily, the second device receives the second signal and determines the distance between the first device and the second device based on the second signal. Optionally, the second device may further determine its own location based on the distance between the first device and the second device (in a case where the location of the first device is obtained) or determine the location of the first device (in a case where its own position is known). Optionally, the second device may further transmit the distance to the third device, so that the third device determines the location of the first device and/or the second device.

Exemplarily, the third device receives the second signal and determines the distance between the first device and the second device based on the second signal. Optionally, the third device may further determine the location of the first device and/or the second device based on the distance between the first device and the second device. Optionally, the third device may further transmit the distance to the second device, so that the second device determines the location of the first device and/or the second device.

Exemplarily, the second device receives the second signal and obtains relevant information of the second signal (e.g., at least one of the phase difference or signal strength of the second signal). Then the second device transmits intermediate data used for positioning (e.g., at least one of the relevant information of the second signal, the location information of the second device, or the location information of the first device) to the third device, so that the third device determines the location of the first device and/or the second device.

Exemplarily, the third device receives the second signal and obtains relevant information of the second signal (e.g., at least one of the phase difference or signal strength of the second signal). Then the second device transmits intermediate data used for positioning (e.g., at least one of the relevant information of the second signal, the location information of the second device, or the location information of the first device) to the second device, so that the second device determines the location of the first device and/or the second device.

If the location of the first device and/or the second device is determined by the second device, it can be considered that the positioning service is performed by the second device, and that the first device and/or the third device are used to assist the second device in performing the positioning service.

If the location of the first device and/or the second device is determined by the third device, it can be considered that the positioning service may be considered to be performed by the third device, and that the first device and/or the second device are used to assist the third device in performing the positioning service.

**Next, the four communication solutions mentioned above will be described in the context of specific communication scenarios, using positioning based on phase difference as an example.**

### I. Communication scenario 1, as illustrated in FIG. 9, includes a first device 910 and a second device 920, where the second device 920 is exemplified as a network device or a UE.

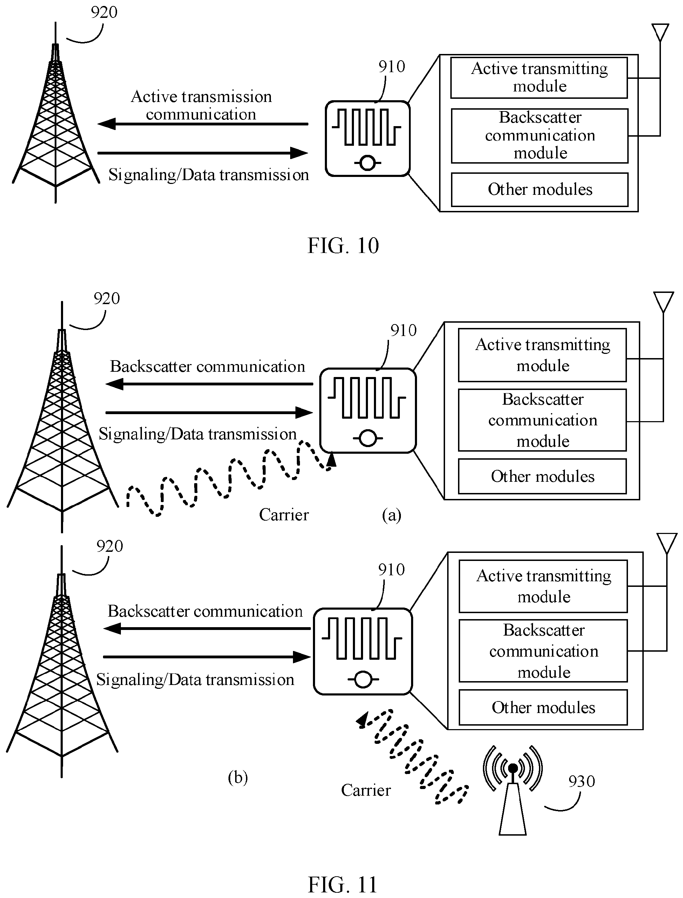

The first device 910 can perform active transmission-based communication with the second device 920, as illustrated in FIG. 10, or perform backscatter-based communication, as illustrated in FIG. 11. Considering the source of the carrier signal required for backscatter communication, FIG. 11(a) illustrates a schematic diagram where the carrier signal is provided by the second device, and FIG. 11(b) illustrates a schematic diagram where the carrier signal is provided by another device 930 other than the first device and the second device.

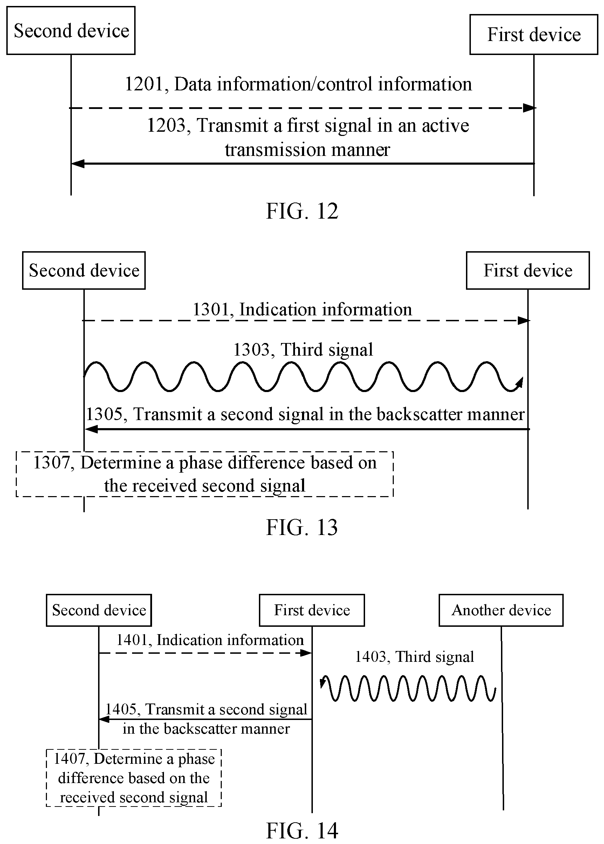

In some embodiments, in the communication scenario illustrated in FIG. 10, the active communication procedure between the first device and the second device is illustrated in FIG. 12 and includes at least one of the following steps.

**In Step 1201** (optional step), the second device transmits data information and/or control information to the first device.

Optionally, the control information may be used to schedule or trigger the first device to use active communication, or to configure the time-frequency resources for the first signal.

**In Step 1203**, the first device transmits a first signal to the second device in an active transmission manner.

The first signal is actively transmitted by the first device, that is, the carrier of the first signal is generated by the first device itself.

For the time-frequency resources used for the first signal, reference may be made to the preceding description, and details are not repeated here.

The execution order of Step 1201 and Step 1203 may be adjusted according to practical situations, for example, Step 1203 may be performed before Step 1201.

In some embodiments, in the communication scenario illustrated in FIG. 11(a), the backscatter communication procedure between the first device and the second device is illustrated in FIG. 13 and includes at least one of the following steps.

**In Step 1301** (optional step), the second device transmits indication information to the first device.

Optionally, the indication information may be used to schedule or trigger the first device to use backscatter communication, or to configure the time-frequency resources for the second signal.

**In Step 1303**, the second device transmits a third signal to the first device.

The third signal is a carrier signal. Optionally, the third signal may be implemented as a sequence.

**In Step 1305**, the first device transmits a second signal to the second device in the backscatter manner.

The second signal is transmitted by the first device in the backscatter manner, that is, the carrier of the second signal is not generated by the first device itself but is provided to it by an external source.

For the time-frequency resources used for the second signal, reference may be made to the preceding description, and details are not repeated here.

**In Step 1307** (optional step), the second device determines a phase difference based on the received second signal.

In the embodiments of the present application, the phase difference used for determining distance may be a phase difference corresponding to the one-way distance between the first device and the second device, or a phase difference corresponding to the round-trip distance between the first device and the second device. Furthermore, to improve the accuracy of the positioning result, the second signal may be transmitted in the backscatter manner at different frequencies. Optionally, the second device further determines its own location information based on the phase difference. For the content related to determining the phase difference and the positioning principles, reference may be made to the preceding description, and details will not be repeated here.

Exemplarily, at least one of following information of the second signal is used for positioning: a phase difference of the second signal, signal strength of the second signal, or the first information carried by the second signal. The first information may, for example, include the location information of the first device. The location information of the first device may be the absolute location information or relative location information.

In some embodiments, the phase difference of the second signal includes a phase difference between the second signal and the third signal.

In some embodiments, the second signal includes a first sub-signal and a second sub-signal, and the third signal includes a third sub-signal and a fourth sub-signal. The first sub-signal is a backscatter signal of the third sub-signal, that is, the third sub-signal is a carrier signal of the first sub-signal. The second sub-signal is a backscatter signal of the fourth sub-signal, that is, the fourth sub-signal is a carrier signal of the second sub-signal. The third sub-signal and the fourth sub-signal may be signals independent of each other or may be associated signals (e.g., associated in frequency-domain resources, sequences, or carried information), and the frequency-domain resources used for the third sub-signal and the fourth sub-signal are different.

In some embodiments, a phase difference between the first sub-signal and the third sub-signal is called a first phase difference, and a phase difference between the second sub-signal and the fourth sub-signal is called a second phase difference. The phase difference between the second signal and the third signal is determined based on the first phase difference and the second phase difference. Exemplarily, the difference between the first phase difference and the second phase difference is the phase difference between the second signal and the third signal.

The execution order of Step 1301, Step 1303, Step 1305, and Step 1307 may be adjusted according to practical situations. For example, Step 1303 may be performed before Step 1301. For example, Step 1303 and Step 1304 can be implemented as a single step, and even the indication information can be carried in the third signal. That is, the third signal serves both as the carrier signal used for backscatter, and used to trigger backscatter communication and/or configure the time-frequency resources for the second signal.

In some embodiments, in the communication scenario illustrated in FIG. 11(b), the backscatter communication procedure between the first device and the second device is illustrated in FIG. 14, which includes at least one of the following steps.

**In Step 1401** (optional step), the second device transmits indication information to the first device.

Optionally, the indication information may be used to schedule or trigger the first device to use backscatter communication, to configure the time-frequency resources for the second signal, or to trigger the first device to perform a positioning service.

**In Step 1403**, another device transmits a third signal to the first device.

The third signal is a carrier signal. Optionally, the third signal may be implemented as a sequence.

**In Step 1405**, the first device transmits a second signal to the second device in the backscatter manner.

The second signal is transmitted by the first device in the backscatter manner, that is, the carrier of the second signal is not generated by the first device itself but is provided by an external source.

For the time-frequency resources used for the second signal, reference may be made to the preceding description, and details will not be repeated here.

**In Step 1407** (optional step), the second device determines a phase difference based on the received second signal.

In the embodiments of the present application, the phase difference used for determining distance may be a phase difference corresponding to the one-way distance between the first device and the second device, or a phase difference corresponding to the round-trip distance between the first device and the second device. Furthermore, to improve the accuracy of the positioning result, the second signal may be transmitted in the backscatter manner at different frequencies. Optionally, the second device further determines its own location information based on the phase difference. For the content related to determining the phase difference and the positioning principles, reference may be made to the preceding description, and details will not be repeated here.

It should be noted that, as illustrated in FIGs. 9 to 14, the number of second devices may be one or more, and the number of first devices may also be one or more. The second device can determine its location information based on the distances between itself and a plurality of first devices. The first device can also determine its location information based on the distances between itself and a plurality of second devices.

The communication procedures illustrated in FIGs. 12, 13, and 14 may be used individually or in combination. For example, FIG. 12 may be used in combination with FIG. 13, or FIG. 12 may be used in combination with FIG. 14.

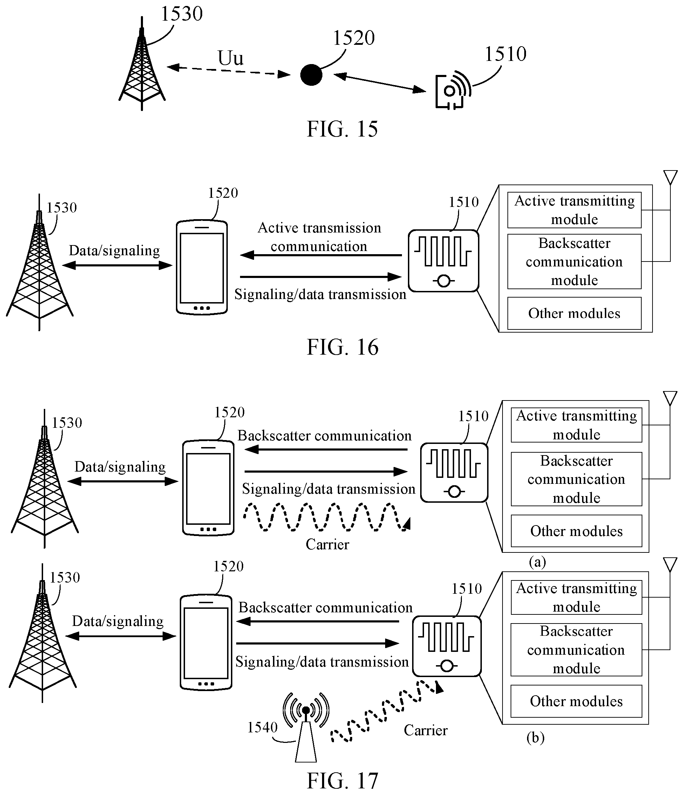

II. Communication scenario 2, as illustrated in FIG. 15, includes a first device 1510, a second device 1520, and a third device 1530. As an example, the second device 1520 is an intermediate node, and the third device 1530 is a network device. Exemplarily, the second device 1520 communicates with the third device 1530 via a Uu interface.

The second device 1520 can perform active transmission-based communication with the first device 1510 under the control of the third device 1530, as illustrated in FIG. 16. Alternatively, the second device 1520 can perform backscatter-based communication with the first device 1510 under the control of the third device 1530, as illustrated in FIG. 17. Considering the source of the carrier signal required for backscatter communication, FIG. 17(a) illustrates a schematic diagram where the carrier signal is provided by the second device 1520, and FIG. 17(b) illustrates a schematic diagram where the carrier signal is provided by another device 1540 other than the first device 1510, the second device 1520, and the third device 1530. In some cases, the third device 1530 may also directly provide the carrier signal to the first device 1510.

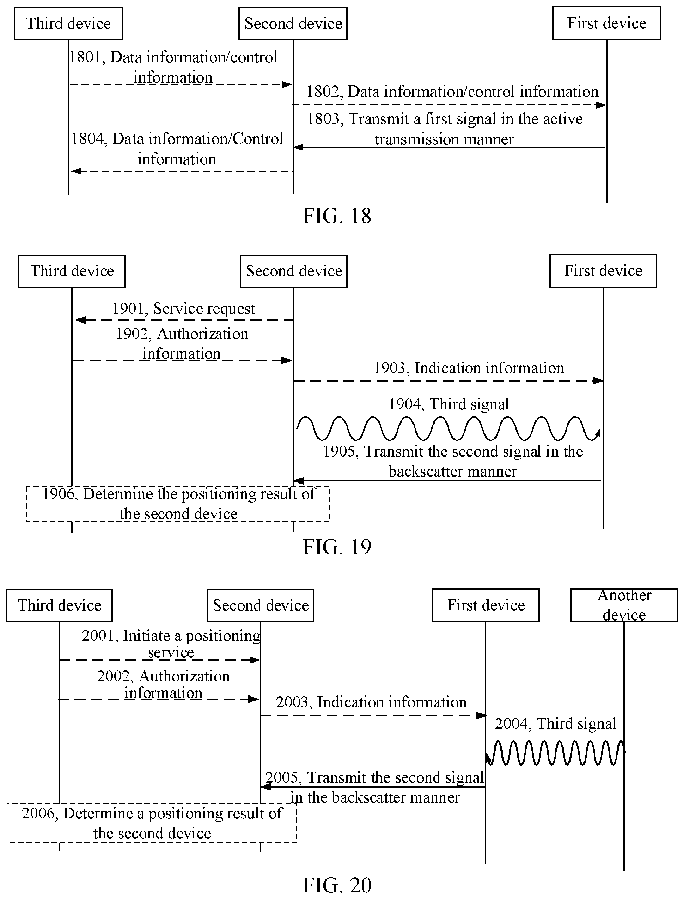

In some embodiments, in the communication scenario illustrated in FIG. 16, the active communication procedure of the first device is illustrated in FIG. 18 and includes at least one of the following steps.

**In Step 1801** (optional step), the third device transmits data information and/or control information to the second device.

Optionally, the control information may be used to schedule or trigger the second device to perform active transmission-based communication with the first device.

**In Step 1802** (optional step), the second device transmits data information and/or control information to the first device.

Optionally, the control information may be used to schedule or trigger the first device to use active communication, or to configure the time-frequency resources for the first signal.

**In Step 1803**, the first device transmits a first signal to the second device in the active transmission manner.

The first signal is actively transmitted by the first device, that is, the carrier of the first signal is generated by the first device itself.

For the time-frequency resources used for the first signal, reference may be made to the preceding description, and details will not be repeated here.

**In Step 1804** (optional step), the second device transmits data information and/or control information to the third device.

Step 1801 and Step 1804 represent the communication between the third device and the second device, and the third device and the second device may exchange data information, control information, request information, or the like.

The execution order of Step 1801 to Step 1804 may be adjusted according to practical situations. For example, Step 1804 may be performed before Step 1801; Step 1804 may be performed before Step 1803; Step 1804 may be performed before Step 1802; Step 1803 may be performed before Step 1801; or Step 1803 may be performed before Step 1802. The other possibilities are not listed exhaustively here.

In some embodiments, in the communication scenario illustrated in FIG. 17, the backscatter communication procedure is illustrated in FIG. 19 or FIG. 20. FIG. 19 illustrates a positioning service initiated by the second device, and FIG. 20 illustrates a positioning service initiated by the third device.

The backscatter communication procedure illustrated in FIG. 19 includes at least one of the following steps.

**In Step 1901** (optional step), the second device transmits a service request to the third device.

The service request is used to request the execution of a positioning service. It can be understood that the second device may also initiate the positioning service by directly performing Step 1903 without transmitting the service request.

**In Step 1902** (optional step), the third device transmits authorization information to the second device.

For the authorization information mentioned here, reference may be made to the related content in the preceding description. The authorization information is used to authorize the second device to perform the positioning service. Optionally, the authorization information may also be implemented as control signaling, scheduling signaling, or the like, to trigger/control the second device to perform backscatter-based communication with the first device. Optionally, the authorization information carries configuration information of the time-frequency resources used for the second signal.

If Step 1901 and Step 1902 are performed, it can be considered that the positioning service is initiated by the second device, authorized by the third device, and performed by the first device and the second device.

**In Step 1903** (optional step), the second device transmits indication information to the first device.

Optionally, the indication information may be used to schedule or trigger the first device to use backscatter communication, to configure the time-frequency resources for the second signal, or to trigger the first device to perform the positioning service.

**In Step 1904**, the first device receives a third signal.

The third signal is a carrier signal. Optionally, the third signal may be implemented as a sequence. Optionally, the third signal originates from the second device, the third device, or another device other than the second device and the third device. FIG. 19 illustrates an example where the third signal originates from the second device.

**In Step 1905**, the first device transmits the second signal to the second device in the backscatter manner.

The second signal is transmitted by the first device in the backscatter manner, that is, the carrier of the second signal is not generated by the first device itself but is provided by an external source.

For the time-frequency resources used for the second signal, reference may be made to the preceding description, and details will not be repeated here.

**In Step 1906** (optional step), the second device and/or the third device determine the positioning result of the second device.

In some embodiments, a phase difference of the second signal is calculated by the second device. Alternatively, the second device transmits the phase characteristics of the received second signal to the third device, and the third device calculates the phase difference of the second signal.

In some embodiments, the positioning result is calculated by the second device, that is, the second device determines its own location information based on the phase difference of the second signal. Optionally, the second device reports the obtained positioning result to the third device.

In some embodiments, the positioning result is calculated by the third device, that is, the third device determines the location information of the second device based on the phase difference of the second signal. The phase difference may be calculated by the second device and reported to the third device, or calculated by the third device based on intermediate data reported by the second device.

For the principle of determining the phase difference, reference may be made to the preceding description. In the embodiments of the present application, the phase difference used for determining distance may be a phase difference corresponding to the one-way distance between the first device and the second device or the round-trip distance between the first device and the second device. Furthermore, to improve the accuracy of the positioning result, the second signal may be transmitted in the backscatter manner at different frequencies. The principle for such a scheme has also been described in the preceding description, and will not be repeated here.

The execution order of Step 1901 to Step 1907 may be adjusted according to practical situations. For example, Step 1903 may be performed before Step 1901; Step 1904 may be performed before Step 1903; Step 1904 may be performed before Step 1902; or Step 1903 may be performed before Step 1901; or Step 1903 may be performed before Step 1902. The other possibilities are not listed exhaustively here. For example, Step 1903 and Step 1904 can be implemented as the same step, and even the indication information can carried in the third signal. That is, the third signal serves as both the carrier signal used for backscatter, and used to trigger backscatter communication and/or used to configure the time-frequency resources for the second signal.

The backscatter communication procedure illustrated in FIG. 20 includes at least one of the following steps.

**In Step 2001** (optional step), the third device initiates a positioning service.

The third device may initiate the positioning service, for example, by transmitting information used to schedule the second device to perform the positioning service to the second device. Exemplarily, the information used to schedule the second device to perform the positioning service may be scheduling information, control signaling, a trigger message, or a specific sequence.

**In Step 2002** (optional step), the third device transmits authorization information to the second device.

For the authorization information mentioned here, reference may be made to the related content in the preceding description. The authorization information is used to authorize the second device to perform the positioning service. Optionally, the authorization information may also be implemented as control signaling, scheduling signaling, or the like, to trigger/control the second device to perform backscatter-based communication with the first device. Optionally, the authorization information carries configuration information of the time-frequency resources used for the second signal.

Optionally, Step 2001 and Step 2002 can be implemented as the same step. For example, the information used to schedule the second device to perform the positioning service can carry the configuration information of time-frequency resources, or the like.

**In Step 2003** (optional step), the second device transmits indication information to the first device.

Optionally, the indication information may be used to schedule or trigger the first device to use backscatter communication, to configure the time-frequency resources for the second signal, or to trigger the first device to perform the positioning service.

**In Step 2004**, the first device receives a third signal.

The third signal is a carrier signal. Optionally, the third signal may be implemented as a sequence. Optionally, the third signal originates from the second device, the third device, or another device other than the second device and the third device. FIG. 20 illustrates an example where the third signal originates from another device.

**In Step 2005**, the first device transmits the second signal to the second device in the backscatter manner.

The second signal is transmitted by the first device in the backscatter manner, that is, the carrier of the second signal is not generated by the first device itself but is provided by an external source.

For the time-frequency resources used for the second signal, reference may be made to the preceding description, and details will not be repeated here.

**In Step 2006** (optional step), the second device and/or the third device determine a positioning result of the second device.

In some embodiments, a phase difference of the second signal is calculated by the second device. Alternatively, the second device transmits the phase characteristics of the received second signal to the third device, and the third device calculates the phase difference.

In some embodiments, the positioning result is calculated by the second device, that is, the second device determines its own location information based on the phase difference of the second signal. Optionally, the second device reports the obtained positioning result to the third device.

In some embodiments, the positioning result is calculated by the third device, that is, the third device determines the location information of the second device based on the phase difference of the second signal. The phase difference may be calculated by the second device and reported to the third device, or calculated by the third device based on intermediate data reported by the second device.

For the principle of determining the phase difference, reference may be made to the preceding description. In the embodiments of the present application, the phase difference used for determining distance may be a phase difference corresponding to the one-way distance between the first device and the second device or the round-trip distance between the first device and the second device. Furthermore, to improve the accuracy of the positioning result, the second signal may be transmitted in the backscatter manner at different frequencies. The principle for such a scheme has also been described in the preceding description, and will not be repeated here.

The execution order of Step 2001 to Step 2007 may be adjusted according to practical situations. For example, Step 2003 may be performed before Step 2001; Step 2004 may be performed before Step 2003; Step 2004 may be performed before Step 2002; Step 2003 may be performed before Step 2001; or Step 2003 may be performed before Step 2002. The other possibilities are not listed exhaustively here. For example, Step 2003 and Step 2004 can be implemented as the same step, and even the indication information can be carried in the third signal. That is, the third signal serves as both the carrier signal used for backscatter, and used to trigger backscatter communication and/or used to configure the time-frequency resources for the second signal.

It should be noted that, as illustrated in FIG. 18 to FIG. 20, the number of the second devices may be one or more, and the number of the first devices may also be one or more. The second device can determine its location information based on the distances between itself and a plurality of first devices. The first device can also determine its location information based on the distances between itself and a plurality of second devices.

The communication procedures illustrated in FIGs. 18, 19, and 20 may be used individually or in combination. For example, FIG. 18 may be used in combination with FIG. 19, or FIG. 18 may be used in combination with FIG. 20.

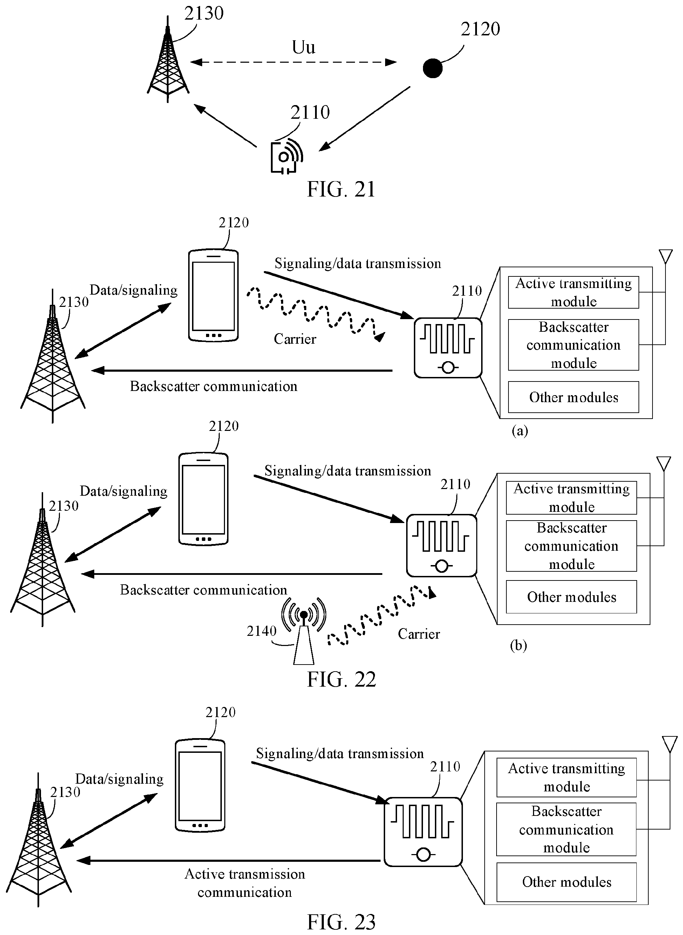

III. Communication scenario 3, as illustrated in FIG. 21, includes a first device 2110, a second device 2120, and a third device 2130. As an example, the second device 2120 is a UE, and the third device 2130 is a network device. Exemplarily, the second device 2110 communicates with the third device 2130 via a Uu interface. Unlike communication scenario 2, the first device 2110 in communication scenario 3 can communicate with the third device 2130 directly. As illustrated in FIG. 22, the first device 2110 transmits a second signal to the third device 2130 in the backscatter manner. Considering the source of the carrier signal required for backscatter communication, FIG. 22(a) illustrates a schematic diagram where the carrier signal is provided by the second device 2120, and FIG. 22(b) illustrates a schematic diagram where the carrier signal is provided by another device 2140 other than the first device 2110, the second device 2120, and the third device 2130. In some cases, the third device 2130 may also directly provide the carrier signal to the first device 2110.

In some embodiments, the second device may trigger the first device to perform active transmission-based communication under the control of the third device, as illustrated in FIG. 23.

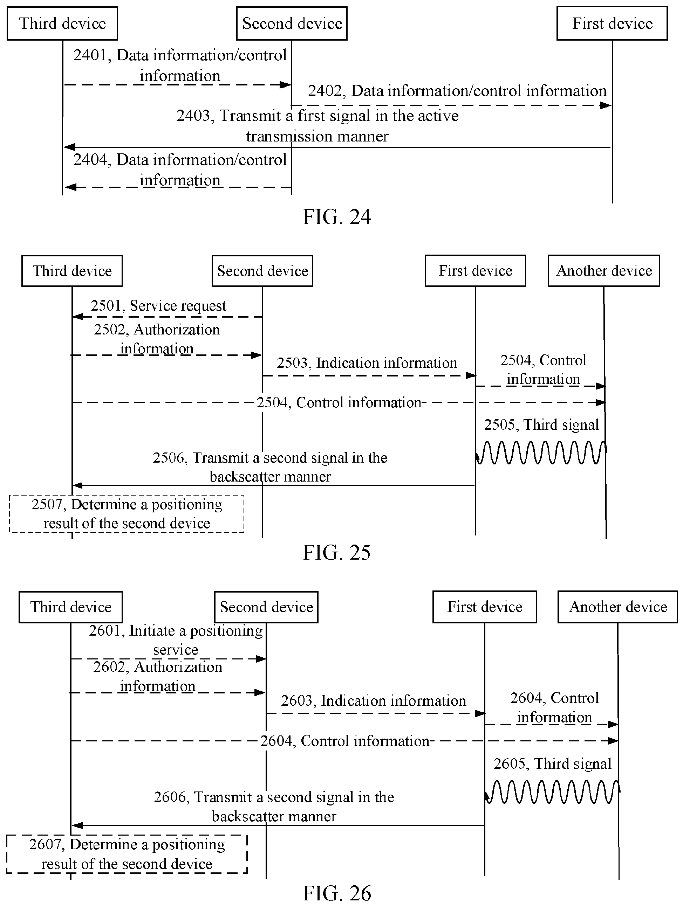

In some embodiments, in the communication scenario illustrated in FIG. 23, the active communication procedure of the first device is illustrated in FIG. 24 and includes at least one of the following steps.

**In Step 2401** (optional step), the third device transmits data information and/or control information to the second device.

Optionally, the control information may be used to schedule or trigger the second device to perform active transmission-based communication with the first device.

**In Step 2402** (optional step), the second device transmits data information and/or control information to the first device.

Optionally, the control information may be used to schedule or trigger the first device to use active communication, or to configure the time-frequency resources for the first signal.

**In Step 2403**, the first device transmits a first signal to the third device in the active transmission manner.

The first signal is actively transmitted by the first device, that is, the carrier of the first signal is generated by the first device itself.

Optionally, the first device may also autonomously transmit the first signal to the second device.

For the time-frequency resources used for the first signal, reference may be made to the preceding description, and details will not be repeated here.

**In Step 2404** (optional step), the second device transmits data information and/or control information to the third device.

Step 2401 and Step 2404 represent the communication between the third device and the second device, and the third device and the second device may exchange data information, control information, request information, or the like.

The execution order of Step 2401 to Step 2404 may be adjusted according to practical situations. For example, Step 2404 may be performed before Step 2401; Step 2404 may be performed before Step 2403; Step 2404 may be performed before Step 2402; Step 2403 may be performed before Step 2401; or Step 2403 may be performed before Step 2402. The other possibilities are not listed exhaustively here.

In some embodiments, in the communication scenario illustrated in FIG. 22, the backscatter communication procedure is illustrated in FIG. 25 or FIG. 26. Specifically, FIG. 25 illustrates a positioning service initiated by the second device, and FIG. 26 illustrates a positioning service initiated by the third device.

The backscatter communication procedure illustrated in FIG. 25 includes at least one of the following steps.

**In Step 2501** (optional step), the second device transmits a service request to the third device.

The service request is used to request the execution of a positioning service. It can be understood that the second device may also initiate the positioning service by directly performing Step 2503 without transmitting the service request.

**In Step 2502** (optional step), the third device transmits authorization information to the second device.

For the authorization information mentioned here, reference may be made to the related content in the preceding description. The authorization information is used to authorize the second device to perform the positioning service. Optionally, the authorization information may also be implemented as control signaling, scheduling signaling, or the like, to trigger/control the second device to perform backscatter-based communication with the first device. Optionally, the authorization information carries configuration information of the time-frequency resources used for the second signal.

If Step 2501 and Step 2502 are performed, it can be considered that the positioning service is initiated by the second device, authorized by the third device, and performed by the first device and the second device.

**In Step 2503** (optional step), the second device transmits indication information to the first device.

Optionally, the indication information may be used to schedule or trigger the first device to use backscatter communication, to configure the time-frequency resources for the second signal, or to trigger the first device to perform the positioning service.

**In Step 2504** (optional step), another device receives control information.

Optionally, the third device transmits the control information to another device, and the control information indicates the device to provide a carrier signal to the first device.

Optionally, the second device transmits the control information to another device, and the control information indicates the device to provide a carrier signal to the first device (not illustrated in the figure).

Optionally, the first device transmits the control information to another device, and the control information indicates the device to provide a carrier signal to the first device.

**In Step 2505**, the first device receives a third signal.

The third signal is a carrier signal. Optionally, the third signal may be implemented as a sequence. Optionally, the third signal originates from the second device, the third device, or another device other than the second device and the third device. FIG. 25 illustrates an example where another device provides the third signal to the first device.

**In Step 2506**, the first device transmits a second signal to the third device in the backscatter manner.

The second signal is transmitted by the first device in the backscatter manner, that is, the carrier of the second signal is not generated by the first device itself but is provided by an external source.

For the time-frequency resources used for the second signal, reference may be made to the preceding description, and details will not be repeated here.

**In Step 2507** (optional step), the third device determines a positioning result of the second device.

In some embodiments, a phase difference of the second signal is calculated by the second device. Alternatively, the second device transmits the phase characteristics of the received second signal to the third device, and the third device calculates the phase difference.

In some embodiments, the positioning result is calculated by the second device, that is, the second device determines its own location information based on the phase difference of the second signal. Optionally, the second device reports the obtained positioning result to the third device.

In some embodiments, the positioning result is calculated by the third device, that is, the third device determines the location information of the second device based on the phase difference of the second signal. The phase difference may be calculated by the second device and reported to the third device, or calculated by the third device based on intermediate data reported by the second device.

For the principle of determining the phase difference, reference may be made to the preceding description. In the embodiments of the present application, the phase difference used for determining distance may be a phase difference corresponding to the one-way distance between the first device and the second device or the round-trip distance between the first device and the second device. Furthermore, to improve the accuracy of the positioning result, the second signal may be transmitted in the backscatter manner at different frequencies. The principle for such a scheme has also been described in the preceding description, and will not be repeated here.

The execution order of Step 2501 to Step 2507 may be adjusted according to practical situations. For example, Step 2503 may be performed before Step 2501; Step 2504 may be performed before Step 2503; Step 2504 may be performed before Step 2502; Step 2503 may be performed before Step 2501; or Step 2503 may be performed before Step 2502. The other possibilities are not listed exhaustively here.

The backscatter communication procedure illustrated in FIG. 26 includes at least one of the following steps.

**In Step 2601** (optional step), the third device initiates a positioning service.

The third device may initiate the positioning service, for example, by transmitting information used to schedule the second device to perform the positioning service to the second device. Exemplarily, the information used to schedule the second device to perform the positioning service may be scheduling information, control signaling, a trigger message, or a specific sequence.

**In Step 2602** (optional step), the third device transmits authorization information to the second device.

For the authorization information mentioned here, reference may be made to the related content in the preceding description. The authorization information is used to authorize the second device to perform the positioning service. Optionally, the authorization information may also be implemented as control signaling, scheduling signaling, or the like, to trigger/control the second device to perform backscatter-based communication with the first device. Optionally, the authorization information carries configuration information of the time-frequency resources used for the second signal.

Optionally, Step 2001 and Step 2002 may be implemented as the same step. For example, the information used to schedule the second device to perform the positioning service may carry configuration information of the time-frequency resources, or the like.

**In Step 2603** (optional step), the second device transmits indication information to the first device.

Optionally, the indication information may be used to schedule or trigger the first device to use backscatter communication, to configure the time-frequency resources for the second signal, or to trigger the first device to perform the positioning service.

**In Step 2604** (optional step), another device receives control information.

Optionally, the third device transmits the control information to another device, and the control information indicates the device to provide a carrier signal to the first device.

Optionally, the second device transmits the control information to another device, and the control information indicates the device to provide a carrier signal to the first device (not illustrated in the figure).

Optionally, the first device transmits the control information to another device, and the control information indicates the device to provide a carrier signal to the first device.

**In Step 2605**, the first device receives a third signal.

The third signal is a carrier signal. Optionally, the third signal may be implemented as a sequence. Optionally, the third signal originates from the second device, the third device, or another device other than the second device and the third device.

**In Step 2606**, the first device transmits a second signal to the third device in the backscatter manner.

The second signal is transmitted by the first device in the backscatter manner, that is, the carrier of the second signal is not generated by the first device itself but is provided by an external source.

For the time-frequency resources used for the second signal, reference may be made to the preceding description, and details will not be repeated here.

**In Step 2607** (optional step), the third device determines a positioning result of the second device.

In some embodiments, a phase difference of the second signal is calculated by the second device. Alternatively, the second device transmits the phase characteristics of the received second signal to the third device, and the third device calculates the phase difference.

In some embodiments, the positioning result is calculated by the second device, that is, the second device determines its own location information based on the phase difference of the second signal. Optionally, the second device reports the obtained positioning result to the third device.

In some embodiments, the positioning result is calculated by the third device, that is, the third device determines the location information of the second device based on the phase difference of the second signal. The phase difference may be calculated by the second device and reported to the third device, or calculated by the third device based on intermediate data reported by the second device.

For the principle of determining the phase difference, reference may be made to the preceding description. In the embodiments of the present application, the phase difference used for determining distance may be a phase difference corresponding to the one-way distance between the first device and the second device or the round-trip distance between the first device and the second device. Furthermore, to improve the accuracy of the positioning result, the second signal may be transmitted in the backscatter manner at different frequencies. The principle for such a scheme has also been described in the preceding description, and will not be repeated here.

The execution order of Step 2601 to Step 2607 may be adjusted according to practical situations. For example, Step 2603 may be performed before Step 2601; Step 2604 may be performed before Step 2603; Step 2604 may be performed before Step 2602; Step 2603 may be performed before Step 2601; or Step 2603 may be performed before Step 2602. The other possibilities are not listed exhaustively here. For example, Step 2603 and Step 2604 can be implemented as the same step, and even the indication information can be carried in the third signal. That is, the third signal serves as both the carrier signal used for backscatter, and used to trigger backscatter communication and/or used to configure the time-frequency resources for the second signal.

It should be noted that, as illustrated in FIG. 24 to FIG. 26, the number of the second devices may be one or more, and the number of the first devices may also be one or more. The second device can determine its location information based on the distances between itself and a plurality of first devices. The first device can also determine its location information based on the distances between itself and a plurality of second devices.

The communication procedures illustrated in FIGs. 24, 25, and 26 may be used individually or in combination. For example, FIG. 24 may be used in combination with FIG. 25, or FIG. 24 may be used in combination with FIG. 26.

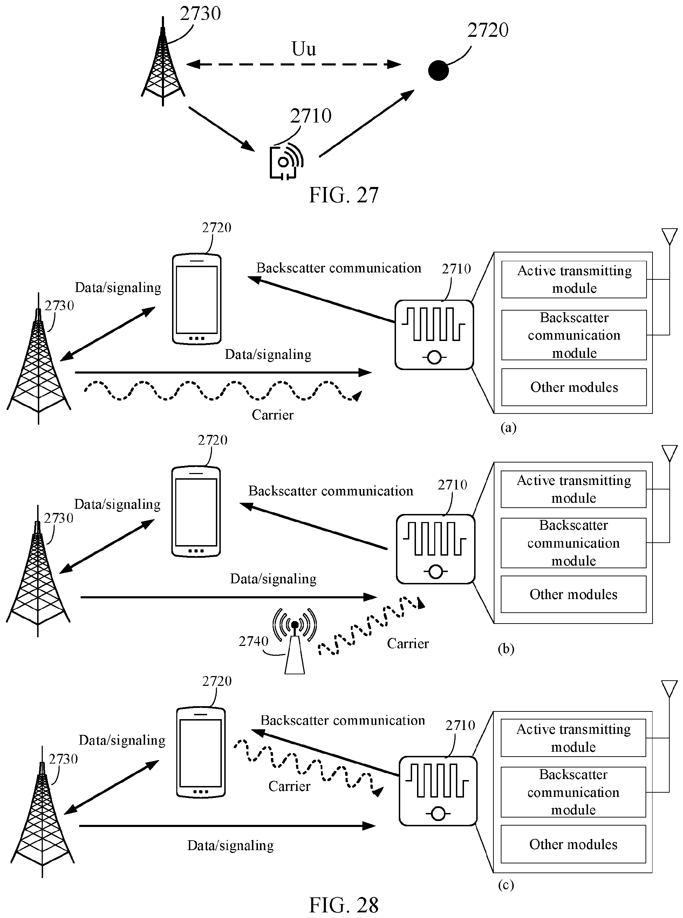

IV. Communication scenario 4, as illustrated in FIG. 27, includes a first device 2710, a second device 2720, and a third device 2730. As an example, the second device 2720 is a UE, and the third device 2730 is a network device. Exemplarily, the second device 2710 communicates with the third device 2730 via a Uu interface.

Communication scenario 4 differs from communication scenario 2 in that the first device 2710 in communication scenario 4 can communicate with the third device 2730 directly. As illustrated in FIG. 28, the first device 2710 transmits a second signal to the third device 2730 in the backscatter manner. Considering the source of the carrier signal required for backscatter communication, FIG. 28(a) illustrates a schematic diagram where the carrier signal is provided directly to the first device 2710 by the third device 2730; FIG. 28(b) illustrates a schematic diagram where the carrier signal is provided by another device 2740 other than the first device 2710, the second device 2720, and the third device 2730; and FIG. 28(c) illustrates a schematic diagram where the carrier signal is provided by the second device 2720.

Communication scenario 4 differs from communication scenario 3 in that the first device 2710 in communication scenario 4 directly transmits the second signal to the third device 2730, that is, the first device 2710 transmits the second signal to the third device 2730 in the backscatter manner.

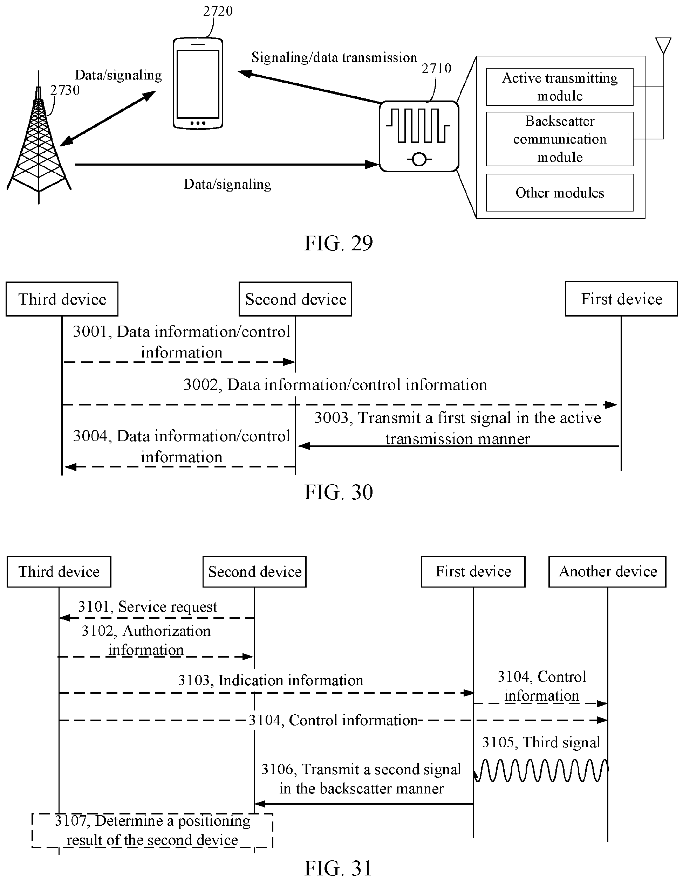

A schematic diagram of the active transmission-based communication in communication scenario 4 is illustrated in FIG. 29.

In some embodiments, in the communication scenario illustrated in FIG. 29, the active communication procedure of the first device is illustrated in FIG. 30 and includes at least one of the following steps.

**In Step 3001** (optional step), the third device transmits data information and/or control information to the second device.

Optionally, the control information may be used to schedule or trigger the second device to perform active transmission-based communication with the first device.

**In Step 3002** (optional step), the third device transmits data information and/or control information to the first device.

Optionally, the control information may be used to schedule or trigger the first device to use active communication, or to configure the time-frequency resources for the first signal.

**In Step 3003**, the first device transmits a first signal to the second device in the active transmission manner.

The first signal is actively transmitted by the first device, that is, the carrier of the first signal is generated by the first device itself.

Optionally, the first device may also autonomously transmit the first signal to the second device.

For the time-frequency resources used for the first signal, reference may be made to the preceding description, and details will not be repeated here.

In some embodiments, the first device may also transmit the first signal to the third device in the active transmission manner (not illustrated in the figure).

**In Step 3004** (optional step), the second device transmits data information and/or control information to the third device.

Step 3001 and Step 3004 represent the communication between the third device and the second device, and the third device and the second device may exchange data information, control information, request information, or the like.

The execution order of Step 3001 to Step 3004 may be adjusted according to practical situations. For example, Step 3004 may be performed before Step 3001, Step 3004 may be performed before Step 3003, Step 3004 may be performed before Step 3002, Step 3003 may be performed before Step 3001, or Step 3003 may be performed before Step 3002. The other possibilities are not listed exhaustively here.

In some embodiments, in the communication scenario illustrated in FIG. 28, the backscatter communication procedure is illustrated in FIG. 31 or FIG. 32. FIG. 31 illustrates a positioning service initiated by the second device, and FIG. 32 illustrates a positioning service initiated by the third device.

The backscatter communication procedure illustrated in FIG. 31 includes at least one of the following steps.

**In Step 3101** (optional step), the second device transmits a service request to the third device.

The service request is used to request the execution of a positioning service. It can be understood that the second device may also initiate the positioning service by directly performing Step 3103 without transmitting the service request.

**In Step 3102** (optional step), the third device transmits authorization information to the second device.

For the authorization information mentioned here, reference may be made to the relevant content in the preceding description. The authorization information is used to authorize the second device to perform the positioning service. Optionally, the authorization information may also be implemented as control signaling, scheduling signaling, or the like, to trigger/control the second device to perform backscatter-based communication with the first device. Optionally, the authorization information carries configuration information of the time-frequency resources used for the second signal.

If Step 3101 and Step 3102 are performed, it can be considered that the positioning service is initiated by the second device, authorized by the third device, and performed by the first device and the second device.

**In Step 3103** (optional step), the third device transmits indication information to the first device.

Optionally, the indication information may be used to schedule or trigger the first device to use backscatter communication, to configure the time-frequency resources for the second signal, or to trigger the first device to perform the positioning service.

**In Step 3104** (optional step), another device receives control information.

Optionally, the third device transmits the control information to another device, and the control information indicates the device to provide a carrier signal to the first device.

Optionally, the second device transmits the control information to another device, and the control information indicates the device to provide a carrier signal to the first device (not illustrated in the figure).

Optionally, the first device transmits the control information to another device, and the control information indicates the device to provide a carrier signal to the first device.

**In Step 3105**, the first device receives a third signal.

The third signal is a carrier signal. Optionally, the third signal may be implemented as a sequence. Optionally, the third signal originates from the second device, the third device, or another device other than the second device and the third device. FIG. 31 illustrates an example where another device provides the third signal to the first device.

**In Step 3106**, the first device transmits a second signal to the second device in the backscatter manner.

The second signal is transmitted by the first device in the backscatter manner, that is, the carrier of the second signal is not generated by the first device itself but is provided by an external source.

For the time-frequency resources used for the second signal, reference may be made to the preceding description, and details will not be repeated here.

**In Step 3107** (optional step), the second device and/or the third device determine a positioning result of the second device.

In some embodiments, a phase difference of the second signal is calculated by the second device. Alternatively, the second device transmits the phase characteristics of the received second signal to the third device, and the third device calculates the phase difference.

In some embodiments, the positioning result is calculated by the second device, that is, the second device determines its own location information based on the phase difference of the second signal. Optionally, the second device reports the obtained positioning result to the third device.

In some embodiments, the positioning result is calculated by the third device, that is, the third device determines the location information of the second device based on the phase difference of the second signal. The phase difference may be calculated by the second device and reported to the third device, or calculated by the third device based on intermediate data reported by the second device.

For the principle of determining the phase difference, reference may be made to the preceding description. In the embodiments of the present application, the phase difference used for determining distance may be a phase difference corresponding to the one-way distance between the first device and the second device or the round-trip distance between the first device and the second device. Furthermore, to improve the accuracy of the positioning result, the second signal may be transmitted in the backscatter manner at different frequencies. The principle for such a scheme has also been described in the preceding description, and will not be repeated here.

The execution order of Step 3101 to Step 3107 may be adjusted according to practical situations. For example, Step 3103 may be performed before Step 3101, Step 3104 may be performed before Step 3103, Step 3104 may be performed before Step 3102, Step 3103 may be performed before Step 3101, or Step 3103 may be performed before Step 3102. The other possibilities are not listed exhaustively here.

The backscatter communication procedure illustrated in FIG. 32 includes at least one of the following steps.

**In Step 3201** (optional step), the third device initiates a positioning service.

The third device may initiate the positioning service, for example, by transmitting information used to schedule the second device to perform the positioning service to the second device. Exemplarily, the information used to schedule the second device to perform the positioning service may be scheduling information, control signaling, a trigger message, or a specific sequence.

**In Step 3202** (optional step), the third device transmits authorization information to the second device.

For the authorization information mentioned here, reference may be made to the related content in the preceding description. The authorization information is used to authorize the second device to perform the positioning service. Optionally, the authorization information may also be implemented as control signaling, scheduling signaling, or the like, to trigger/control the second device to perform backscatter-based communication with the first device. Optionally, the authorization information carries configuration information of the time-frequency resources used for the second signal.

Optionally, Step 2001 and Step 2002 can be implemented as the same step. For example, the information used to schedule the second device to perform the positioning service can carry configuration information of the time-frequency resources, or the like.

**In Step 3203** (optional step), the third device transmits indication information to the first device.

Optionally, the indication information may be used to schedule or trigger the first device to use backscatter communication, to configure the time-frequency resources for the second signal, or to trigger the first device to perform the positioning service.

**In Step 3204**, the first device receives a third signal.

The third signal is a carrier signal. Optionally, the third signal may be implemented as a sequence. Optionally, the third signal originates from the second device, the third device, or another device other than the second device and the third device. FIG. 32 illustrates an example where the second device provides the carrier signal to the first device.

**In Step 3205**, the first device transmits a second signal to the second device in the backscatter manner.

The second signal is transmitted by the first device in the backscatter manner, that is, the carrier of the second signal is not generated by the first device itself but is provided by an external source.

For the time-frequency resources used for the second signal, reference may be made to the preceding description, and details will not be repeated here.

**In Step 3206** (optional step), the second device and/or the third device determine a positioning result of the second device.

In some embodiments, a phase difference of the second signal is calculated by the second device. Alternatively, the second device transmits the phase characteristics of the received second signal to the third device, and the third device calculates the phase difference.

In some embodiments, the positioning result is calculated by the second device, that is, the second device determines its own location information based on the phase difference of the second signal. Optionally, the second device reports the obtained positioning result to the third device.

In some embodiments, the positioning result is calculated by the third device, that is, the third device determines the location information of the second device based on the phase difference of the second signal. The phase difference may be calculated by the second device and reported to the third device, or calculated by the third device based on intermediate data reported by the second device.

For the principle of determining the phase difference, reference may be made to the preceding description. In the embodiments of the present application, the phase difference used for determining distance may be a phase difference corresponding to the one-way distance between the first device and the second device or the round-trip distance between the first device and the second device. Furthermore, to improve the accuracy of the positioning result, the second signal may be transmitted in the backscatter manner at different frequencies. The principle for such a scheme has also been described in the preceding description, and will not be repeated here.

The execution order of Step 3201 to Step 3206 may be adjusted according to practical situations. For example, Step 3203 may be performed before Step 3201, Step 3204 may be performed before Step 3203, Step 3204 may be performed before Step 3202, Step 3203 may be performed before Step 3201, or Step 3203 may be performed before Step 3202. The other possibilities are not listed exhaustively here. For example, Step 3203 and Step 3204 can be implemented as the same step, and even the indication information can be carried in the third signal. That is, the third signal serves as both the carrier signal used for backscatter, and used to trigger backscatter communication and/or used to configure the time-frequency resources for the second signal.

It should be noted that, as illustrated in FIG. 30 to FIG. 32, the number of the second devices may be one or more, and the number of the first devices may also be one or more. The second device can determine its location information based on the distances between itself and a plurality of first devices. The first device can also determine its location information based on the distances between itself and a plurality of second devices.

The communication procedures illustrated in FIGs. 30, 31, and 32 may be used individually or in combination. For example, FIG. 30 may be used in combination with FIG. 31, or FIG. 30 may be used in combination with FIG. 32.

Referring to the above positioning process and considering the actual communication scenarios, the embodiments of the present application provide a transmission system 3300 as illustrated in FIG. 33. The transmission system 3300 may be implemented as part of the first device described above.

The transmission system 3300 includes a first transmitting module 3310 and/or a second transmitting module 3320. Optionally, the transmission system 3300 may further include other modules 3330. The other modules 3330 may include one or more of the following: an antenna, an LNA, a PA, a frequency converter, a filter, a digital-to-analog converter (DAC), a modulator, an oscillator, or an encoder.

The first transmitting module 3310 supports actively transmitting a signal, therefore, the first transmitting module 3310 may also be referred to as an active transmitting module. In the embodiments of the present application, the active transmission manner means that no other communication device is required to provide a carrier signal. When the first transmitting module 3310 transmits a signal, the carrier signal required for the communication may be generated in the first device, and the first transmitting module 3310 has the capability to actively transmit the carrier signal generated by the first device. The signals that the first transmitting module 3310 supports its transmission include at least one of the following: a single-carrier signal, a multi-carrier signal, a code-division multiple access signal, or an orthogonal frequency-division multiplexing (OFDM) signal. The first transmitting module 3310 may be implemented as at least one of the following transmitters or as a part of a transmitter: an NR transmitter, a narrowband Internet of Things (NB-IoT) transmitter, an MTC transmitter, a Bluetooth transmitter, a Wi-Fi transmitter, or a low-power active transmitter with a peak power consumption less than several hundred microwatts, which will not be limited in the embodiments of the present application.

The second transmitting module 3320 supports backscatter signals, therefore, the second transmitting module 3320 may also be referred to as a backscatter communication module, a backscatter transmitting module, a backscatter module, or the like. In the embodiments of the present application, the backscatter transmission manner means that another device is required to provide the carrier signal. When the second transmitting module 3320 transmits a signal, it backscatters an externally provided carrier signal. The second transmitting module 3320 does not have the capability to actively transmit a carrier signal, which can also be understood as that the second transmitting module 3320 has the capability to passively transmit a carrier signal. The modulation schemes supported by the second transmitting module 3320 include at least one of the following: amplitude shift keying (ASK) modulation, on-off keying (OOK) modulation, phase shift keying (PSK) modulation, binary phase shift keying (BPSK) modulation, or frequency shift keying (FSK) modulation, which will not be limited in the embodiments of the present application. The second transmitting module 3320 may be implemented as a backscatter transmitter or a part of a backscatter transmitter. The backscatter transmitter may power itself through power harvesting manner, or may use the power supply or stored energy of the first device to drive its own operation (e.g., to drive logic circuits related to backscatter). It can be understood that the power supply or stored energy of the first device can drive both the second transmitting module 3320 and the first transmitting module 3310.

In some embodiments, the first transmitting module 3310 and the second transmitting module 3320 are implemented as separate transmitters. For example, the first transmitting module 3310 is implemented as a low-power active transmitter, and the second transmitting module 3320 is implemented as a backscatter transmitter, where the active transmitter and the backscatter transmitter are independent of each other.

In some embodiments, the first transmitting module 3310 and the second transmitting module 3320 are integrated into a single transmitter, that is, the first device has one transmitter, but this transmitter includes two types of transmitting modules. For example, the first device has a low-power transmitter that includes the first transmitting module 3310 and the second transmitting module 3320.

Such a transmission system, which supports both active transmission and backscatter, can ensure the quality of the communication between itself and other communication devices (e.g., using the active transmission manner) while also enabling auxiliary positioning with the advantage of low-power consumption. When auxiliary positioning is needed, using the backscatter communication manner to transmit signals makes it easier for the signal receiver to determine the distance according to the signal strength or the phase characteristics of the signal, thereby achieving the positioning of the target device. In an example where distance d is determined based on the phase characteristics, the signal receiver can determine the phase difference caused by the propagation distance d based on the relationship between the initial phase of the outgoing signal and the phase of the incident carrier during the backscatter communication procedure (e.g., the phases are the same phase or continuous phases, or have a phase offset), thus determining the distance d.

In some embodiments, a first device equipped with the transmission system 3300 can report its capability information to the network device. As an example, the first device transmits first capability information, and the first capability information is used to indicate whether the first device supports operating with the first transmitting module 3310 and/or the second transmitting module 3320. This design of reporting the first capability information allows the network device to select an appropriate transmission manner for the first device based on the actual service type (e.g., data service, or positioning service), which helps to improve the efficiency of the communication system.

Exemplarily, after the network device learns that the first device has both active transmission capability and backscatter communication capability, the network device can schedule or trigger the first device to operate in the active transmission manner (i.e., using the active transmission manner) when the first device needs to perform a non-positioning service. The non-positioning service includes, but is not limited to, at least one of the following: data transmission, parameter configuration, paging, or reporting. When the first device needs to perform a positioning service, the network device schedules or triggers the first device to operate in the backscatter transmission manner (i.e., using the backscatter communication manner). Such a design helps to ensure the communication quality of the first device, saves the power consumption of the first device, greatly enhances the communication flexibility of the first device, expands the application scenarios of the first device, and meets various communication service requirements.

In some embodiments, the first capability information is carried in radio resource control (RRC) signaling.

In some embodiments, the first capability information is transmitted via the first transmitting module 3310. That is, the first transmitting module 3310 actively transmits the first capability information.

FIG. 34 illustrates a block diagram of a communication apparatus provided by an exemplary embodiment of the present application. The apparatus can be implemented as the first device described above, or as a part of the first device described above. The apparatus includes the first transmitting module 3310 and the second transmitting module 3320. Optionally, the apparatus further includes a receiving module 3340 and/or a processing module 3350. Optionally, the apparatus further includes other modules 3330 as illustrated in FIG. 33 (not illustrated in FIG. 34).

The first transmitting module 3310 is configured to transmit a first signal, and the second transmitting module 3320 is configured to transmit a second signal in a backscatter manner. The first signal is used to carry first information, and the second signal is used to carry the first information and/or used for positioning.

For the first transmitting module 3310 and the second transmitting module 3320, reference may be made to the embodiments illustrated in FIG. 33, and details will not be repeated here.

In some embodiments, a carrier signal of the second signal is a third signal, and the third signal is transmitted by a second device, or is transmitted by the second device under control of a third device.

In some embodiments, frequency domain resources used for the second signal are the same as or different from frequency domain resources used for the third signal.

In some embodiments, frequency domain resources used for the second signal are determined based on frequency domain resources used for the third signal.

In some embodiments, a first offset exists between time domain resources used for the first signal and time domain resources used for the second signal, and the first offset is configured by a network device, specified in a communication protocol, or determined based on a capability of the communication apparatus.

In some embodiments, a second offset exists between frequency domain resources used for the first signal and frequency domain resources used for the second signal, and the second offset is configured by a network device, specified in a communication protocol, or determined based on a capability of the communication apparatus.

In some embodiments, the first transmitting module 3310 is further configured to transmit a fourth signal, where the fourth signal is used to negotiate time-frequency resources used for the second signal.

In some embodiments, the receiving module 3340 is configured to receive a fifth signal, where the fifth signal is used to configure time-frequency resources used for the second signal, or is used to configure an offset between the time-frequency resources used for the second signal and time domain resources used for a reference signal.

In some embodiments, the first transmitting module 3310 is further configured to transmit the first signal in a case where a first condition is satisfied; where the first condition includes at least one of the following: first indication information is received, and the first indication information is used to indicate the communication apparatus to operate using the first transmitter; or the number of bits of the first information is greater than or equal to a first threshold.

In some embodiments, the processing module 3350 is configured to determine whether the first condition is satisfied.

In some embodiments, the receiving module 3340 is configured to receive the first indication information.

In some embodiments, the first indication information is transmitted by a second device, or the first indication information is transmitted by the second device under control of a third device.

In some embodiments, the second transmitting module 3320 is configured to transmit the second signal in the backscatter manner using the second transmitter in a case where a second condition is satisfied; where the second condition includes at least one of the following: second indication information is received, and the second indication information is used to indicate the communication apparatus to operate using the second transmitter; the number of bits of the first information is less than or equal to a second threshold; or third indication information is received, and the third indication information is used to indicate the communication apparatus to perform a positioning service.

In some embodiments, the processing module 3350 is configured to determine whether the second condition is satisfied.

In some embodiments, the receiving module 3340 is configured to receive the second indication information and/or the third indication information.

In some embodiments, the first transmitting module 3310 is further configured to transmit first capability information, where the first capability information is used to indicate whether the communication apparatus supports operating using the first transmitter and/or the second transmitter.

In some embodiments, the first capability information is carried in radio resource control (RRC) signaling.

In some embodiments, the first capability information is transmitted via the first transmitter.

In some embodiments, at least one of following information of the second signal is used for positioning: a phase difference of the second signal, signal strength of the second signal, or the first information carried by the second signal.

In some embodiments, the phase difference of the second signal includes a phase difference between the second signal and a third signal, and the second signal is a backscatter signal of the third signal.

In some embodiments, the phase difference between the second signal and the third signal is determined based on a first phase difference and a second phase difference; where the second signal includes a first sub-signal and a second sub-signal, the third signal includes a third sub-signal and a fourth sub-signal, the first sub-signal is a backscatter signal of the third sub-signal, the second sub-signal is a backscatter signal of the fourth sub-signal, the first phase difference is a phase difference between the first sub-signal and the third sub-signal, and the second phase difference is a phase difference between the second sub-signal and the fourth sub-signal.

In some embodiments, the communication apparatus includes at least one of following types of devices: a zero-power device, an ultra-low-power device, a low-power device, a passive Internet of Things device, or an A-IoT device.

In some embodiments, one or more of the first transmitting module 3310, the second transmitting module 3320, the receiving module 3340, or the processing module 3350 are configured to perform the functions and steps performed by the first device in the embodiments illustrated in FIG. 10 to FIG. 32.

In summary, the apparatus provided in the embodiments of the present application supports both the active transmission communication manner and the backscatter communication manner. Since the backscatter communication manner does not require the apparatus to generate the carrier on its own, power consumption can be effectively reduced, which contributes to achieving low-power communication. Furthermore, the backscatter communication manner supports application in positioning services, and the use of the backscatter communication manner helps to improve positioning accuracy.

FIG. 35 illustrates a block diagram of a communication apparatus provided in an exemplary embodiment of the present application. The apparatus can be implemented as the second device as described above, or as a part of the second device as described above. The apparatus includes a receiving module 3510. Optionally, the apparatus further includes a transmitting module 3530 and/or a processing module 3550.

The receiving module 3510 is configured to receive a first signal and/or a second signal; where the first signal is used to carry first information, and the first signal is transmitted using a first transmitter; the second signal is used to carry the first information and/or used for positioning, and the second signal is transmitted in a backscatter manner using a second transmitter.

In some embodiments, the transmitting module 3530 is configured to transmit a third signal, or to transmit the third signal under control of a third device; where the third signal is a carrier signal of the second signal.

In some embodiments, frequency domain resources used for the second signal are the same as or different from frequency domain resources used for the third signal.

In some embodiments, frequency domain resources used for the second signal are determined based on frequency domain resources used for the third signal.

In some embodiments, a first offset exists between time domain resources used for the first signal and time domain resources used for the second signal, and the first offset is configured by a network device, specified in a communication protocol, or determined based on a capability of a first device.

In some embodiments, a second offset exists between frequency domain resources used for the first signal and frequency domain resources used for the second signal, and the second offset is configured by a network device, specified in a communication protocol, or determined based on a capability of a first device.

In some embodiments, the receiving module 3510 is configured to receive a fourth signal, where the fourth signal is transmitted by the first transmitter and is used to negotiate time-frequency resources used for the second signal.

In some embodiments, the transmitting module 3530 is configured to transmit a fifth signal, or to transmit the fifth signal under the control of a third device; where the fifth signal is used to configure time-frequency resources used for the second signal, or is used to configure an offset between time-frequency resources used for the second signal and time domain resources used for a reference signal.

In some embodiments, the transmitting module 3530 is configured to perform at least one of the following:
transmitting first indication information, where the first indication information is used to indicate a first device to operate using the first transmitter;
transmitting the first indication information under the control of a third device;
transmitting second indication information, where the second indication information is used to indicate the first device to operate using the second transmitter;
transmitting the second indication information under the control of a third device;
transmitting third indication information, where the third indication information is used to indicate a first device to perform a positioning service; or
transmitting the third indication information under the control of a third device.

In some embodiments, the receiving module 3510 is configured to receive first capability information, where the first capability information is used to indicate whether a first device supports operating using the first transmitter and/or the second transmitter.

In some embodiments, the first capability information is transmitted via the first transmitter.

In some embodiments, the processing module 3550 is configured to determine a positioning result based on at least one of following information of the second signal: a phase difference of the second signal, signal strength of the second signal, or the first information carried by the second signal.

In some embodiments, the transmitting module 3530 is configured to report at least one of following information of the second signal: the phase difference of the second signal, the signal strength of the second signal, or the first information carried by the second signal.

In some embodiments, the phase difference of the second signal includes a phase difference between the second signal and a third signal, and the third signal is a carrier signal of the second signal.

In some embodiments, the phase difference between the second signal and the third signal is determined based on a first phase difference and a second phase difference; where the second signal includes a first sub-signal and a second sub-signal, the third signal includes a third sub-signal and a fourth sub-signal, the third sub-signal is a carrier signal of the first sub-signal, and the fourth sub-signal is a carrier signal of the second sub-signal; the first phase difference is a phase difference between the first sub-signal and the third sub-signal, and the second phase difference is a phase difference between the second sub-signal and the fourth sub-signal.

In some embodiments, the first device includes at least one of following types of devices: a zero-power device, an ultra-low-power device, a low-power device, a passive Internet of Things device, or A-IoT device.

In some embodiments, one or more of the receiving module 3510, the transmitting module 3530, or the processing module 3550 are configured to perform the functions and steps performed by the second device in the embodiments illustrated in FIG. 10 to FIG. 32.

In summary, the apparatus provided in the embodiments of the present application can achieve positioning based on the backscatter signal from the first device, so as to offer good positioning accuracy and save the overall power consumption of the communication system. Moreover, the apparatus supports autonomous active transmission-based communication and/or backscatter-based communication with the first device, which helps to achieve low-power communication.

FIG. 36 illustrates a block diagram of a communication apparatus provided in an exemplary embodiment of the present application. The apparatus can be implemented as the third device as described above, or as a part of the third device as described above. The apparatus includes a transmitting module 3610. Optionally, the apparatus further includes a receiving module 3630 and/or a processing module 3650.

The transmitting module 3610 is configured to transmit control information, where the control information is used to control a first device to transmit a first signal using a first transmitter and/or control a first device to transmit a second signal in a backscatter manner using a second transmitter. The first signal is used to carry first information, and the second signal is used to carry the first information and/or used for positioning.

In some embodiments, the transmitting module 3610 is configured to transmit the control information to a second device or the first device.

In some embodiments, the third signal is transmitted by the second device, or is transmitted by the second device under control of the third device.

In some embodiments, frequency domain resources used for the second signal are the same as or different from frequency domain resources used for the third signal.

In some embodiments, frequency domain resources used for the second signal are determined based on frequency domain resources used for the third signal.

In some embodiments, a first offset exists between time domain resources used for the first signal and time domain resources used for the second signal, and the first offset is configured by a network device, specified in a communication protocol, or determined based on a capability of the first device.

In some embodiments, a second offset exists between frequency domain resources used for the first signal and frequency domain resources used for the second signal, and the second offset is configured by a network device, specified in a communication protocol, or determined based on a capability of the first device.

In some embodiments, the receiving module 3630 is configured to receive a fourth signal, where the fourth signal is transmitted using the first transmitter, and the fourth signal is used to negotiate time-frequency resources used for the second signal.

In some embodiments, the transmitting module 3610 is configured to transmit a fifth signal to the first device or the second device; where the fifth signal is used to configure time-frequency resources used for the second signal, or is used to configure an offset between time-frequency resources used for the second signal and time domain resources used for a reference signal.

In some embodiments, the transmitting module 3610 is configured to perform at least one of the following:
transmitting first indication information, where the first indication information is used to indicate the first device to operate using the first transmitter;
transmitting second indication information, where the second indication information is used to indicate the first device to operate using the second transmitter; or
transmitting third indication information, where the third indication information is used to indicate the first device to perform a positioning service.

In some embodiments, the receiving module 3630 is configured to receive first capability information, where the first capability information is used to indicate whether the first device supports operating using the first transmitter and/or the second transmitter.

In some embodiments, the first capability information is carried in radio resource control (RRC) signaling.

In some embodiments, the first capability information is transmitted via the first transmitter.

In some embodiments, the receiving module 3630 is configured to receive the first signal and/or the second signal.

In some embodiments, the receiving module 3630 is configured to receive at least one of following information: a phase difference of the second signal, signal strength of the second signal, the first information carried by the second signal, distance information related to the second signal, or a positioning result related to the second signal.

In some embodiments, the processing module 3650 is configured to determine a positioning result related to the second signal based on at least one of following information: a phase difference of the second signal, signal strength of the second signal, the first information carried by the second signal, or distance information related to the second signal.

In some embodiments, the phase difference of the second signal includes a phase difference between the second signal and a third signal, and the third signal is a carrier signal of the second signal.

In some embodiments, the phase difference between the second signal and the third signal is determined based on a first phase difference and a second phase difference; where the second signal includes a first sub-signal and a second sub-signal, the third signal includes a third sub-signal and a fourth sub-signal, the third sub-signal is a carrier signal of the first sub-signal, and the fourth sub-signal is a carrier signal of the second sub-signal; the first phase difference is a phase difference between the first sub-signal and the third sub-signal, and the second phase difference is a phase difference between the second sub-signal and the fourth sub-signal.

In some embodiments, the first device includes at least one of following types of devices: a zero-power device, an ultra-low-power device, a low-power device, a passive Internet of Things device, or an A-IoT device.

In some embodiments, one or more of the transmitting module 3610, the receiving module 3630, or the processing module 3650 are configured to perform the functions and steps performed by the third device in the embodiments illustrated in FIG. 10 to FIG. 32.

In summary, the apparatus provided in the embodiments of the present application can achieve positioning based on the backscatter signal from the first device, so as to offer good positioning accuracy and save the overall power consumption of the communication system. Moreover, the apparatus supports autonomous active transmission-based communication and/or backscatter-based communication with the first device, which helps to achieve low-power communication.

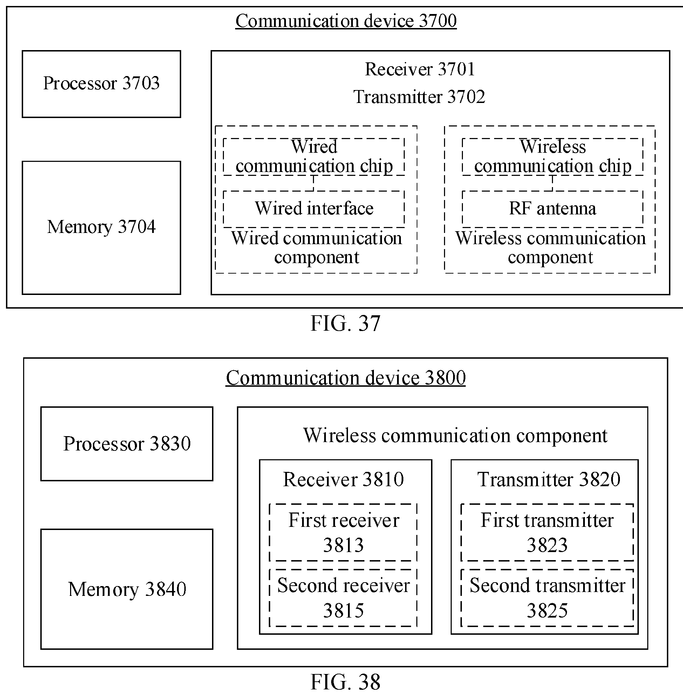

FIG. 37 illustrates a schematic block diagram of a communication device 3700 provided in an exemplary embodiment of the present application. The communication device 3700 includes at least one of the following: a receiver 3701, a transmitter 3702, a processor 3703, a memory 3704, or a bus (not illustrated in the figure). The communication device 3700 can be used to perform some or all of the steps performed by the above second device and/or third device and/or another device.

The receiver 3701 is configured to implement the receiving function, and the transmitter 3702 is configured to implement the transmitting function.

In some embodiments, the receiver 3701 and the transmitter 3702 may be implemented as one communication component, which may be a communication chip, and the communication component may be referred to as a transceiver. In some embodiments, the receiver 3701 may be used to implement the functions and steps of the above receiving module 3510 and/or receiving module 3630, and the transmitter 3702 may be used to implement the functions and steps of the above transmitting module 3530 and/or transmitting module 3610.

In some embodiments, the receiver 3701 and the transmitter 3702 may be implemented as a wireless communication component and/or a wired communication component. Optionally, the wireless communication component includes a wireless communication chip and/or a radio frequency antenna. Optionally, the wired communication component includes a wired communication chip and/or a wired interface.

The processor 3703 includes one or more processing cores. The processor 3703 executes various functional applications and information processing by running software programs and modules. In some embodiments, the processor 3703 may be used to implement the functions and steps of the above processing module 3550 and/or processing module 3650.

The memory 3704 may be used to store computer programs executable on the processor 3703. The processor 3703 is configured to execute the computer programs to implement the various steps in the above method embodiments.

In some embodiments, the memory 3704 may be connected to the processor 3703, the receiver 3701 and the transmitter 3702.

In addition, the memory 3704 may be implemented by any type of volatile or non-volatile storage device or a combination thereof, which includes but is not limited to: a magnetic disk or an optical disc, an electrically-erasable programmable read only memory (EEPROM), an erasable programmable read only memory (EPROM), a static random access memory (SRAM), a read-only memory (ROM), a magnetic memory, a flash memory, or a programmable read-only memory (PROM).

In some embodiments, the receiver 3701 receives signals/data independently, or the processor 3703 controls the receiver 3701 to receive signals/data, or the processor 3703 requests the receiver 3701 to receive signals/data, or the processor 3703 cooperates with the receiver 3701 to receive signals/data.

In some embodiments, the transmitter 3702 transmits signals/data independently, or the processor 3703 controls the transmitter 3702 to transmit signals/data, or the processor 3703 requests the transmitter 3702 to transmit signals/data, or the processor 3703 cooperates with the transmitter 3702 to transmit signals/data.

For details not described in this embodiment, reference may be made to the embodiments described above, and details will not be repeated here.

FIG. 38 illustrates a schematic block diagram of a communication device 3800 provided in an exemplary embodiment of the present application. The communication device 3800 includes at least one of the following: a receiver 3810, a transmitter 3820, a processor 3830, a memory 3840, and a bus (not illustrated in the figure). The communication device 3800 can be used to perform some or all of the steps performed by the above first device.

The receiver 3810 is configured to implement the receiving function, and the transmitter 3820 is configured to implement the transmitting function.

In some embodiments, the receiver 3810 and the transmitter 3820 may be implemented as one communication component, which may be a communication chip, and the communication component may be referred to as a transceiver. As an example, the receiver 3810 and the transmitter 3820 are implemented as a wireless communication component. Optionally, the wireless communication component includes a wireless communication chip and/or a radio frequency antenna (not illustrated in the figure).

In some embodiments, the receiver 3810 is configured to implement the functions and steps of the above receiving module 3340.

In some embodiments, the receiver 3810 may be implemented as a first receiver 3813 and a second receiver 3815.

In some embodiments, the first receiver 3813 and the second receiver 3815 are two independently operating receivers, that is, the receiver 3810 includes two independent receivers: the first receiver 3813 and the second receiver 3815. Alternatively, the receiver 3810 is implemented as a combined receiver of the first receiver 3813 and the second receiver 3815.

In some embodiments, the first receiver 3813 is implemented as a wake-up receiver (WUR), which may also be referred to as a low-power WUR (LP-WUR), an ultra-low-power WUR, a low-power receiver, an ultra-low-power receiver, a zero-power receiver, a secondary receiver, or the like.

In some embodiments, the second receiver 3815 is implemented as a main receiver or a conventional receiver.

In some embodiments, the transmitter 3820 may be used to implement the functions and steps of the above first transmitting module 3310 and/or second transmitting module 3320. Optionally, the transmitter 3820 may be implemented as a first transmitter 3823 and/or a second transmitter 3825, where the first transmitter 3823 is used to implement the functions and steps of the first transmitting module 3310, and the second transmitter 3825 is used to implement the functions and steps of the second transmitting module 3320.

In some embodiments, the first transmitter 3823 and the second transmitter 3825 are two independently operating transmitters, that is, the transmitter 3820 includes two independent transmitters: the first transmitter 3823 and the second transmitter 3825. Alternatively, the transmitter 3820 is implemented as a combined transmitter of the first transmitter 3823 and the second transmitter 3825.

In some embodiments, the first transmitter 3823 is implemented as an active transmitter, and the second transmitter 3825 is implemented as a backscatter transmitter.

In some embodiments, the processor 3830 and the receiver 3810 may be implemented as one module, or the processor 3830 may be implemented as part of the receiver 3810.

The processor 3830 includes one or more processing cores. The processor 3830 executes various functional applications and information processing by running software programs and modules. In some embodiments, the processor 3830 may be used to implement the functions and steps of the above processing module 1150.

The memory 3840 may be used to store computer programs executable on the processor 3830. The processor 3830 is configured to execute the computer programs to implement the various steps in the above method embodiments.

In some embodiments, the memory 3840 may be connected to the processor 3830, the receiver 3810 and the transmitter 3820.

In addition, the memory 3840 may be implemented by any type of volatile or non-volatile storage device or a combination thereof, which includes but is not limited to: a magnetic disk or an optical disc, an EEPROM, an EPROM, an SRAM, a ROM, a magnetic memory, a flash memory, or a PROM.

In some embodiments, the receiver 3810 receives signals/data independently, or the processor 3830 controls the receiver 3810 to receive signals/data, or the processor 3830 requests the receiver 3810 to receive signals/data, or the processor 3830 cooperates with the receiver 3810 to receive signals/data.

In some embodiments, the transmitter 3820 transmits signals/data independently, or the processor 3830 controls the transmitter 3820 to transmit signals/data, or the processor 3830 requests the transmitter 3820 to transmit signals/data, or the processor 3830 cooperates with the transmitter 3820 to transmit signals/data.

In some embodiments, the processor 3830 and the receiver 3810 may be implemented as one module, or the processor 3830 may be implemented as part of the receiver 3810.

In some embodiments, the processor 3830 and the transmitter 3820 may be implemented as one module, or the processor 3830 may be implemented as part of the transmitter 3820.

For details not described in this embodiment, reference may be made to the embodiments described above, and details will not be repeated here.

In an exemplary embodiment of the present application, a chip is further provided. The chip includes a programmable logic circuit and/or program instructions, and when the chip is run on the communication device, the chip is used to implement the transmission method provided in the above various method embodiments.

In some embodiments, the chip includes the first transmitting module 3310 and/or the second transmitting module 3320. Optionally, the chip further includes other modules 3330 and/or the receiving module 3340 and/or the processing module 3350. Reference may be made to the preceding description for related content, and details will not be repeated here.

In some embodiments, the chip includes the receiving module 3510. Optionally, the chip further includes the transmitting module 3530 and/or the processing module 3550. Reference may be made to the preceding description for related content, and details will not be repeated here.

In some embodiments, the chip includes the transmitting module 3610. Optionally, the chip further includes the receiving module 3630 and/or the processing module 3650. Reference may be made to the preceding description for related content, and details will not be repeated here.

In an exemplary embodiment of the present application, a computer-readable storage medium is further provided. The computer-readable storage medium stores at least one program, which is loaded and executed by the processor to implement the communication method provided in the above various method embodiments.

In an exemplary embodiment of the present application, a computer program product is further provided. When the computer program product runs on a processor of a computer device, the computer program product causes the computer device to perform the above communication method.

In an exemplary embodiment of the present application, a computer program is further provided. The computer program includes computer instructions that, when executed by a processor of a computer device, causes the computer device to perform the above communication method.

Any ordinary skilled person in the art can understand that all or part of the steps of the above embodiments can be implemented by hardware, or by a program instructing relevant hardware. The program can be stored in a computer-readable storage medium. The above storage medium can be a read-only memory, a magnetic disk, or an optical disc, or the like.

The above are only optional embodiments of the present application and are not intended to limit the present application. Any modifications, equivalent replacements, improvements, etc., made within the spirit and principles of the present application shall fall within the protection scope of the present application.

## Claims

1. A communication method, wherein the method is performed by a first device, the first device has a first transmitter and a second transmitter, and the method comprises:
transmitting a first signal using the first transmitter, and/or transmitting a second signal in a backscatter manner using the second transmitter; wherein the first signal is used to carry first information, and the second signal is used to carry the first information and/or used for positioning.

2. The method according to claim 1, wherein a carrier signal of the second signal is a third signal;
wherein the third signal is transmitted by a second device, or is transmitted by the second device under control of a third device.

3. The method according to claim 2, wherein frequency domain resources used for the second signal are the same as or different from frequency domain resources used for the third signal.

4. The method according to claim 2 or 3, wherein frequency domain resources used for the second signal are determined based on frequency domain resources used for the third signal.

5. The method according to any one of claims 1 to 4, wherein a first offset exists between time domain resources used for the first signal and time domain resources used for the second signal, and the first offset is configured by a network device, specified in a communication protocol, or determined based on a capability of the first device.

6. The method according to any one of claims 1 to 4, wherein a second offset exists between frequency domain resources used for the first signal and frequency domain resources used for the second signal, and the second offset is configured by a network device, specified in a communication protocol, or determined based on a capability of the first device.

7. The method according to any one of claims 1 to 6, further comprising:
transmitting a fourth signal using the first transmitter; wherein the fourth signal is used to negotiate time-frequency resources used for the second signal.

8. The method according to any one of claims 1 to 7, further comprising:
receiving a fifth signal; wherein the fifth signal is used to configure time-frequency resources used for the second signal, or is used to configure an offset between the time-frequency resources used for the second signal and time domain resources used for a reference signal.

9. The method according to any one of claims 1 to 8, wherein transmitting the first signal using the first transmitter comprises:
in a case where a first condition is satisfied, transmitting the first signal using the first transmitter; wherein the first condition comprises at least one of:
first indication information is received, and the first indication information is used to indicate the first device to operate using the first transmitter; or
the number of bits of the first information is greater than or equal to a first threshold.

10. The method according to claim 9, wherein the first indication information is transmitted by a second device, or the first indication information is transmitted by the second device under control of a third device.

11. The method according to any one of claims 1 to 8, wherein transmitting the second signal in the backscatter manner using the second transmitter comprises:
in a case where a second condition is satisfied, transmitting the second signal in the backscatter manner using the second transmitter; wherein the second condition comprises at least one of:
second indication information is received, and the second indication information is used to indicate the first device to operate using the second transmitter;
the number of bits of the first information is less than or equal to a second threshold; or
third indication information is received, and the third indication information is used to indicate the first device to perform a positioning service.

12. The method according to any one of claims 1 to 11, further comprising:
transmitting first capability information; wherein the first capability information is used to indicate whether the first device supports operating using the first transmitter and/or the second transmitter.

13. The method according to claim 12, wherein the first capability information is carried in radio resource control (RRC) signaling.

14. The method according to claim 12 or 13, wherein the first capability information is transmitted via the first transmitter.

15. The method according to any one of claims 1 to 14, wherein at least one of following information of the second signal is used for positioning: a phase difference of the second signal, signal strength of the second signal, or the first information carried by the second signal.

16. The method according to claim 15, wherein the phase difference of the second signal comprises a phase difference between the second signal and a third signal, and the second signal is a backscatter signal of the third signal.

17. The method according to claim 16, wherein the phase difference between the second signal and the third signal is determined based on a first phase difference and a second phase difference;
wherein the second signal comprises a first sub-signal and a second sub-signal, the third signal comprises a third sub-signal and a fourth sub-signal, the first sub-signal is a backscatter signal of the third sub-signal, the second sub-signal is a backscatter signal of the fourth sub-signal, the first phase difference is a phase difference between the first sub-signal and the third sub-signal, and the second phase difference is a phase difference between the second sub-signal and the fourth sub-signal.

18. The method according to any one of claims 1 to 17, wherein the first device comprises at least one of following types of devices: a zero-power device, an ultra-low-power device, a low-power device, a passive Internet of Things device, or an ambient Internet of Things (A-IoT) device.

19. A communication method, wherein the method is performed by a second device, and the method comprises:
receiving a first signal and/or a second signal; wherein the first signal is used to carry first information, the first signal is transmitted using a first transmitter, the second signal is used to carry the first information and/or used for positioning, and the second signal is transmitted in a backscatter manner using a second transmitter.

20. The method according to claim 19, further comprising: transmitting a third signal, or transmitting the third signal under control of a third device; wherein the third signal is a carrier signal of the second signal.

21. The method according to claim 20, wherein frequency domain resources used for the second signal are the same as or different from frequency domain resources used for the third signal.

22. The method according to claim 20 or 21, wherein frequency domain resources used for the second signal are determined based on frequency domain resources used for the third signal.

23. The method according to any one of claims 19 to 22, wherein a first offset exists between time domain resources used for the first signal and time domain resources used for the second signal, and the first offset is configured by a network device, specified in a communication protocol, or determined based on a capability of a first device.

24. The method according to any one of claims 19 to 23, wherein a second offset exists between frequency domain resources used for the first signal and frequency domain resources used for the second signal, and the second offset is configured by a network device, specified in a communication protocol, or determined based on a capability of a first device.

25. The method according to any one of claims 19 to 24, further comprising:
receiving a fourth signal; wherein the fourth signal is transmitted using the first transmitter, and the fourth signal is used to negotiate time-frequency resources used for the second signal.

26. The method according to any one of claims 19 to 25, further comprising:
transmitting a fifth signal, or transmitting the fifth signal under control of a third device;
wherein the fifth signal is used to configure time-frequency resources used for the second signal, or is used to configure an offset between time-frequency resources used for the second signal and time domain resources used for a reference signal.

27. The method according to any one of claims 19 to 26, wherein the method further comprises at least one of:
transmitting first indication information, wherein the first indication information is used to indicate a first device to operate using the first transmitter;
transmitting the first indication information under control of a third device;
transmitting second indication information, wherein the second indication information is used to indicate the first device to operate using the second transmitter;
transmitting the second indication information under control of a third device;
transmitting third indication information, wherein the third indication information is used to indicate a first device to perform a positioning service; or
transmitting the third indication information under control of a third device.

28. The method according to any one of claims 19 to 27, further comprising:
receiving first capability information; wherein the first capability information is used to indicate whether a first device supports operating using the first transmitter and/or the second transmitter.

29. The method according to claim 28, wherein the first capability information is carried in radio resource control (RRC) signaling.

30. The method according to claim 28 or 29, wherein the first capability information is transmitted via the first transmitter.

31. The method according to any one of claims 19 to 30, further comprising:
determining a positioning result based on at least one of following information of the second signal: a phase difference of the second signal, signal strength of the second signal, or the first information carried by the second signal.

32. The method according to any one of claims 19 to 30, further comprising:
reporting at least one of following information of the second signal: a phase difference of the second signal, signal strength of the second signal, or the first information carried by the second signal.

33. The method according to claim 31 or 32, wherein the phase difference of the second signal comprises a phase difference between the second signal and a third signal, and the third signal is a carrier signal of the second signal.

34. The method according to claim 33, wherein the phase difference between the second signal and the third signal is determined based on a first phase difference and a second phase difference;
wherein the second signal comprises a first sub-signal and a second sub-signal, the third signal comprises a third sub-signal and a fourth sub-signal, the third sub-signal is a carrier signal of the first sub-signal, the fourth sub-signal is a carrier signal of the second sub-signal, the first phase difference is a phase difference between the first sub-signal and the third sub-signal, and the second phase difference is a phase difference between the second sub-signal and the fourth sub-signal.

35. The method according to claim 23, 24, 27 or 28, wherein the first device comprises at least one of following types of devices: a zero-power device, an ultra-low-power device, a low-power device, a passive Internet of Things device, or an ambient Internet of Things (A-IoT) device.

36. A communication method, wherein the method is performed by a third device, the method comprises:
transmitting control information; wherein the control information is used to control a first device to transmit a first signal using a first transmitter and/or control a first device to transmit a second signal in a backscatter manner using a second transmitter;
wherein the first signal is used to carry first information, and the second signal is used to carry the first information and/or used for positioning.

37. The method according to claim 36, wherein transmitting the control information comprises:
transmitting the control information to a second device, or transmitting the control information to the first device.

38. The method according to claim 36 or 37, wherein the third signal is transmitted by a second device, or is transmitted by the second device under control of the third device.

39. The method according to claim 38, wherein frequency domain resources used for the second signal are the same as or different from frequency domain resources used for the third signal.

40. The method according to claim 38 or 39, wherein frequency domain resources used for the second signal are determined based on frequency domain resources used for the third signal.

41. The method according to any one of claims 36 to 40, wherein a first offset exists between time domain resources used for the first signal and time domain resources used for the second signal, and the first offset is configured by a network device, specified in a communication protocol, or determined based on a capability of the first device.

42. The method according to any one of claims 36 to 41, wherein a second offset exists between frequency domain resources used for the first signal and frequency domain resources used for the second signal, and the second offset is configured by a network device, specified in a communication protocol, or determined based on a capability of the first device.

43. The method according to any one of claims 36 to 42, further comprising:
receiving a fourth signal; wherein the fourth signal is transmitted using the first transmitter, and the fourth signal is used to negotiate time-frequency resources used for the second signal.

44. The method according to any one of claims 36 to 43, further comprising:
transmitting a fifth signal to the first device or a second device;
wherein the fifth signal is used to configure time-frequency resources used for the second signal, or is used to configure an offset between time-frequency resources used for the second signal and time domain resources used for a reference signal.

45. The method according to any one of claims 36 to 44, wherein the method further comprises at least one of:
transmitting first indication information, wherein the first indication information is used to indicate the first device to operate using the first transmitter;
transmitting second indication information, wherein the second indication information is used to indicate the first device to operate using the second transmitter; or
transmitting third indication information, wherein the third indication information is used to indicate the first device to perform a positioning service.

46. The method according to any one of claims 36 to 45, further comprising:
receiving first capability information; wherein the first capability information is used to indicate whether the first device supports operating using the first transmitter and/or the second transmitter.

47. The method according to claim 46, wherein the first capability information is carried in radio resource control (RRC) signaling.

48. The method according to claim 46 or 47, wherein the first capability information is transmitted via the first transmitter.

49. The method according to any one of claims 36 to 48, further comprising: receiving the first signal and/or the second signal.

50. The method according to any one of claims 36 to 49, further comprising:
receiving at least one of following information: a phase difference of the second signal, signal strength of the second signal, the first information carried by the second signal, distance information related to the second signal, or a positioning result related to the second signal.

51. The method according to any one of claims 36 to 50, further comprising:
determining a positioning result related to the second signal based on at least one of following information: a phase difference of the second signal, signal strength of the second signal, the first information carried by the second signal, or distance information related to the second signal.

52. The method according to claim 50 or 51, wherein the phase difference of the second signal comprises a phase difference between the second signal and a third signal, and the third signal is a carrier signal of the second signal.

53. The method according to claim 52, wherein the phase difference between the second signal and the third signal is determined based on a first phase difference and a second phase difference;
wherein the second signal comprises a first sub-signal and a second sub-signal, the third signal comprises a third sub-signal and a fourth sub-signal, the third sub-signal is a carrier signal of the first sub-signal, the fourth sub-signal is a carrier signal of the second sub-signal, the first phase difference is a phase difference between the first sub-signal and the third sub-signal, and the second phase difference is a phase difference between the second sub-signal and the fourth sub-signal.

54. The method according to any one of claims 36 to 53, wherein the first device comprises at least one of following types of devices: a zero-power device, an ultra-low-power device, a low-power device, a passive Internet of Things device, or an ambient Internet of Things (A-IoT) device.

55. A communication apparatus, wherein the apparatus comprises: a first transmitting module and/or a second transmitting module;
the first transmitting module; configured to transmit a first signal in an active transmission manner; and
the second transmitting module; configured to transmit a second signal in a backscatter manner;
wherein the first signal is used to carry first information, and the second signal is used to carry the first information and/or used for positioning.

56. A communication apparatus, comprising:
a receiving module, configured to receive a first signal and/or a second signal; wherein the first signal is used to carry first information, the first information is transmitted using a first transmitter, the second signal is used to carry the first information and/or used for positioning, and the second signal is transmitted in a backscatter manner using a second transmitter.

57. A communication apparatus, comprising:
a transmitting module, configured to transmit control information; wherein the control information is used to control a first device to transmit a first signal using a first transmitter, and/or control a first device to transmit a second signal in a backscatter manner using a second transmitter;
wherein the first signal is used to carry first information, and the second signal is used to carry the first information and/or used for positioning.

58. A communication device, comprising: a first transmitter and/or a second transmitter; and the communication device is configured to implement the communication method according to any one of claims 1 to 18.

59. A communication device, comprising: a processor, a receiver and/or a transmitter connected to the processor, and a memory configured to store executable instructions for the processor; and the communication device is configured to implement the communication method according to any one of claims 19 to 35, or the communication method according to any one of claims 36 to 54.

60. A computer-readable storage medium, wherein the computer-readable storage medium stores executable instructions, and the executable instructions are loaded and executed by a processor to implement the communication method according to any one of claims 1 to 18, the communication method according to any one of claims 19 to 35, or the communication method according to any one of claims 36 to 54.

61. A chip, wherein the chip comprises a programmable logic circuit or program, and the chip is configured to implement the communication method according to any one of claims 1 to 18, the communication method according to any one of claims 19 to 35, or the communication method according to any one of claims 36 to 54.

62. A computer program product, wherein the computer program product comprises computer instructions, the computer instructions are stored in a computer-readable storage medium, a processor of a computer device reads the computer instructions from the computer-readable storage medium, and the processor executes the computer instructions to enable the computer device to perform the communication method according to any one of claims 1 to 18, the communication method according to any one of claims 19 to 35, or the communication method according to any one of claims 36 to 54.

63. A computer program, wherein the computer program comprises computer instructions, and a processor of a computer device executes the computer instructions to enable the computer device to perform the communication method according to any one of claims 1 to 18, the communication method according to any one of claims 19 to 35, or the communication method according to any one of claims 36 to 54.
